(19)

Europäisches
Patentamt
European
Patent Office
Office européen
des brevets

(11)  **EP 2 081 386 A1**

(12)  **EUROPEAN PATENT APPLICATION**

(43) Date of publication:
  **22.07.2009 Bulletin 2009/30**

(51) Int Cl.:
  **H04N 7/26** *(2006.01)*

(21) Application number: **08000979.8**

(22) Date of filing: **18.01.2008**

(84) Designated Contracting States:
  **AT BE BG CH CY CZ DE DK EE ES FI FR GB GR
  HR HU IE IS IT LI LT LU LV MC MT NL NO PL PT
  RO SE SI SK TR**
  Designated Extension States:
  **AL BA MK RS**

(71) Applicant: **Panasonic Corporation
  Kadoma-shi
  Osaka 571-8501 (JP)**

(72) Inventors:
  • **Drugeon, Virginie
    63225 Langen (DE)**

  • **Wedi, Thomas, Dr.
    63225 Langen (DE)**
  • **Palfner, Torsten, Dr.
    63225 Langen (DE)**

(74) Representative: **Grünecker, Kinkeldey,
  Stockmair & Schwanhäusser
  Anwaltssozietät
  Leopoldstrasse 4
  80802 München (DE)**

(54)  **High precision edge prediction for intracoding**

(57)    The present invention relates to encoding and decoding of image and video data, and in particular to a new spatial prediction mode for predicting a block of image data from image data of previously encoded/decoded blocks. According to this prediction mode, blocks containing sharp edges may be predicted more faithfully by taking the precise direction of the edge into account. Moreover, the new prediction mode does not require any additional signaling overhead, because (i) the direction of the edge is estimated from previously encoded blocks and (ii) the new prediction mode replaces the conventional DC mode for blocks containing sharp edges.

# Fig. 12

# Fig. 6

```
        ┌──────────────────────────┐
        │  process for determining │
        │   set of prediction modes │
        └──────────────────────────┘
                     │
                     ▼            610
        ┌──────────────────────────┐
        │   edge detection process  │
        └──────────────────────────┘
                     │
                     ▼            620
                  ◇ At least ◇
         yes   ◇ one vector stored ◇   no
              ◇        ?        ◇
         │                          │
   630   ▼                          ▼   640
 ┌────────────────────┐   ┌────────────────────┐
 │   Edge detected:   │   │  No edge detected:  │
 │  Prediction set =  │   │  Prediction set =   │
 │ 8 prediction       │   │ 8 prediction        │
 │ directions         │   │ directions          │
 │ Edge prediction    │   │ DC mode             │
 │ mode               │   │                     │
 └────────────────────┘   └────────────────────┘
         │                          │
         └──────────┬───────────────┘
                    ▼
               ┌─────────┐
               │ return  │
               └─────────┘
```

**Description**

The present invention relates to a method for compressing and decompressing image and video data with improved coding efficiency and a corresponding encoder and decoder. More specifically, the present invention provides an improved method for spatial prediction of image data from image data of previously coded blocks.

BACKGROUND OF THE INVENTION

An ever increasing number of applications relies on a transmission of video information, including video-conferencing, digital video broadcasting, and streaming of video contents over the Internet such as for video-on-demand type services. When video data is being transmitted or recorded, a substantial amount of data has to be sent through conventional transmission channels of limited bandwidth or has to be stored on conventional storage media of limited data capacity. In order to transmit and store video information on conventional channels and media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards is based on predictive coding comprising the following main stages:

(a) Dividing video frames into blocks of pixels in order to subject each video frame to data compression at block level.

(b) Identifying temporal and spatial redundancies by predicting the individual blocks from previously encoded video data.

(c) Removing the identified redundancies by subtracting the predicted data from the video data.

(d) Compressing the remaining data by means of Fourier transformation, quantization, and entropy coding.

Current video coding standards differ in the prediction modes that are employed for predicting each macroblock. Most video coding standards use motion estimation /compensation to predict video data from previously encoded frames (inter-frame prediction). Alternatively, block data may also be extrapolated from neighboring blocks of the same frame (intra-frame prediction). The H.264/AVC standard defines several intra-frame prediction modes that differ, for example, with respect to the reference pixels used for extrapolation or with respect to the direction in which the pixels are extrapolated.

In intra-frame prediction, spatial prediction of subblocks of sizes 4x4, 8x8 or 16x16 pixels is performed in order to reduce the spatial redundancy existing in natural images. The pixel values of the already coded surrounding blocks are used to predict the pixel values of the current block. These reference pixels are extrapolated according to predefined prediction modes. In H.264/AVC there are nine prediction modes for the subblocks of size 4x4 and 8x8, and four for the macroblocks of size 16x16 pixels.

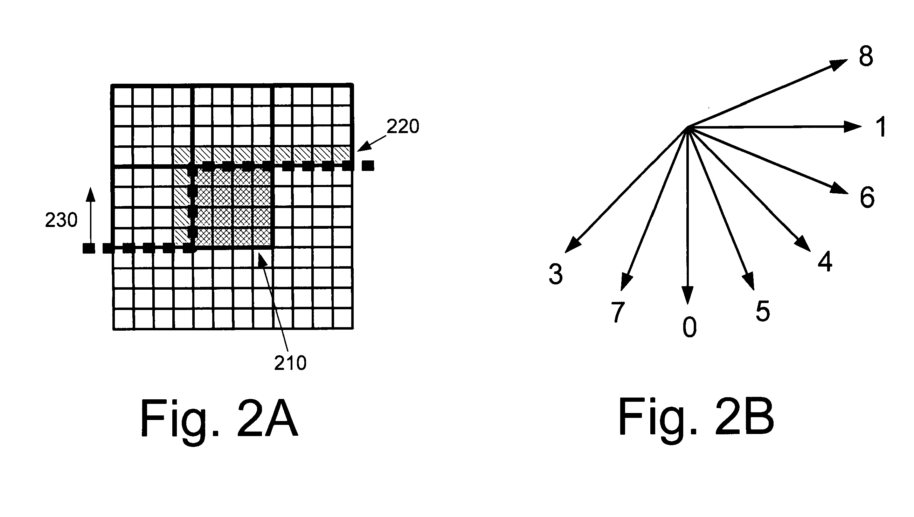

For subblocks smaller than 8x8 pixels, the nine prediction modes consist of eight prediction directions (cf. Fig. 2B), suitable for predicting directional structures, and a so-called DC mode. In the DC mode, all pixels of the current block are predicted with a single value, which is the mean value of the surrounding reference pixels. In the directional modes, the reference pixels are repeated along the corresponding direction. According to the vertical mode, for example, the reference pixels of the row immediately above the current block are repeated vertically. According to the horizontal mode, on the other hand, pixels of the column immediately to the left of the current block are repeated. The remaining modes are diagonal prediction modes derived in similar ways.

The range of angles provided by these prediction directions is limited. If there is a sharp linear edge, the block will be predicted by the mode having the closest angle. But the prediction angle being slightly different from the real angle of the edge, the prediction will produce errors, especially for the pixels at the bottom right corner of the block, where the pixels are the furthest from the references. If the edge is sharp, the prediction will lead to important high frequency coefficients that are expensive to encode.

SUMMARY OF THE INVENTION

The aim of the present invention is to provide an improved method and apparatus for encoding and decoding image and video data so that a higher coding efficiency can be achieved.

This is accomplished by the features as set forth in the independent claims.

Preferred embodiments are the subject matter of dependent claims.

It is the particular approach of the present invention to provide a new intra-prediction mode for predicting a current block of image data by detecting an edge in previously encoded blocks adjacent to the current block and extrapolating reference pixels along the direction of the detected edge.

In this manner, the direction of the prediction is not limited to a set of predefined directions but may be adapted to the actual direction of the edge. Thus, a straight edge can be predicted more faithfully, irrespective of its orientation. Moreover, the direction of the edge in the previously encoded blocks can likewise be determined at the encoder and at the decoder side so that no signaling of the prediction direction is required.

According to a first aspect of the present invention, a method for for encoding image data is provided. The method comprises the steps of partitioning the image data into a plurality of blocks in order to encode the image data on a block-by-block basis, predicting a current block from image data of previously encoded blocks, and is characterized by detecting an edge within previously encoded blocks adjacent to the current block, and wherein the current block is predicted by extra-/interpolating previously encoded image data along a direction of the detected edge.

According to a further aspect of the present invention, a method for decoding, on a block-by-block basis, image data partitioned into a plurality of blocks is provided. The method comprises the step of predicting a current block from image data of previously decoded blocks, and is characterized by detecting an edge within previously decoded blocks adjacent to the current block, wherein the current block is predicted by extra-/interpolating previously encoded image data along a direction of the detected edge.

According to a further aspect of the present invention, an encoder for encoding image data is provided. The encoder comprises a block partitioning unit for partitioning the image data into a plurality of blocks in order to encode the image data on a block-by-block basis, a prediction unit for predicting a current block from image data of previously encoded blocks, and is characterized by an edge detection unit for detecting an edge within previously encoded blocks adjacent to the current block, and wherein the prediction unit is adapted for predicting the current block by extra-/interpolating previously encoded image data along a direction of the detected edge.

According to a further aspect of the present invention, a decoder for decoding, on a block-by-block basis, image data partitioned into a plurality of blocks is provided. The decoder comprises a prediction unit for predicting a current block from image data of previously decoded blocks, and is characterized by an edge detection unit for detecting an edge within previously decoded blocks adjacent to the current block, wherein the prediction unit is adapted for predicting the current block by extra-/interpolating previously encoded image data along a direction of the detected edge.

Preferably, the extra-/interpolation is based on pixel values of blocks adjacent to the current block. Further, the extra-/interpolation is preferably a linear extra-/interpolation. In this case, the current block can be predicted while the sharpness of the edge will be preserved.

Preferably, each pixel of the current block is predicted by computing a weighted sum of at least two pixel values of the previously encoded image data, the weights being determined based on the direction of the detected edge. More preferably, the weights are further determined based on a location of the pixel to be predicted within the current block. In this manner, the current block can be predicted at precisely the angle of the detected edge, thus leading to high prediction accuracy.

Preferably, at least two edges with distinct directions are detected and each pixel of the current block is predicted by combining the results of extra-/interpolating previously encoded/decoded image data along each of the distinct directions. In this case, the results of extra-/interpolation for each pixel are preferably combined by computing a weighted sum, the weights being determined in accordance with a distance of the pixel to a previously encoded/decoded block the corresponding edge has been detected in. More preferably, the weights are further determined based on distances of the pixel to straight continuations of the at least two edges. According to this aspect of the present invention, a block of image data can faithfully be predicted, even if it contains a plurality of non-parallel edges.

Preferably, a prediction mode is selected from a plurality of prediction modes, wherein the current block is predicted in accordance with the selected prediction mode. Further, the prediction mode is preferably selected in accordance with at least one of the resulting bitrate and the resulting distortion of the encoded image. In this manner, a prediction mode that is optimum in terms of coding efficiency can be selected.

Preferably, the plurality of prediction modes comprises an edge prediction mode, and wherein the current block is predicted in accordance with the direction of the detected edge if the edge prediction mode has been selected. In this case, blocks of image data containing sharp edges can be predicted more accurately than by using one of limited number of predefined directional prediction modes.

Preferably, the plurality of prediction modes further comprises a DC prediction mode and a plurality of predefined directional prediction modes, and wherein the current block is predicted in accordance with a mean of previously encoded image data if the DC prediction mode has been selected, and wherein the current block is predicted in accordance with a predefined direction if one of the predefined directional prediction modes has been selected. In this case, even blocks of image data containing no sharp edges or bended edges can be accurately predicted.

Preferably, one of the edge prediction mode and the plurality of predefined directional prediction modes is selected, if an edge is detected, and wherein one of the DC prediction mode and the plurality of predefined directional prediction modes is selected, if an edge is not detected. More preferably, one of the edge prediction mode and the plurality of predefined directional prediction modes is selected, if an edge is detected and the direction of the detected edge points to the current block, and wherein one of the DC prediction mode and the plurality of predefined directional prediction modes is selected otherwise. Accordingly, a pre-selection of suitable prediction modes can be performed in a context-dependent manner, leading to a reduction of the computational effort for determining the final prediction mode.

Preferably, a prediction mode is encoded indicator indicating the selected prediction mode. This allows the decoder to be aware of the prediction mode selected by the encoder and to select the prediction mode for decoding in accordance with the prediction mode indicator.

Preferably, a prediction mode indicator is encoded, indicating the selected directional prediction mode, if one of the predefined directional prediction modes has been selected, and either of the DC prediction mode and the edge prediction mode, if the DC prediction mode or the edge prediction mode has been selected. In this case, the decoder will preferably select the prediction mode in accordance with the prediction mode indicator and a result of the edge detection. Specifically, if the prediction mode indicator indicates the DC prediction mode or the edge prediction mode, the edge prediction mode is selected at the decoder side if an edge is detected, and the DC prediction mode is selected if an edge is not detected in the detecting step. In this manner, no additional signaling overhead is required for signaling the inventive edge prediction mode to the decoder side.

Preferably, a gradient vector is computed for each of a plurality of pixels of previously encoded blocks adjacent to the current block and it is determined, for each gradient vector, whether the norm of the gradient vector exceeds a predetermined threshold and whether a vector perpendicular to the gradient vector is pointing to the current block. In this manner, an edge can readily be detected if there is at least one gradient vector having a positive result of the determining step.

Preferably, the direction of the detected edge is obtained from the direction of the gradient having the largest norm among the gradients having a positive result of the determining step. More preferably, the direction of the detected edge is obtained by averaging the directions of at least a subset of the gradients having a positive result of the determining step. In the latter case, the direction of the edge can be obtained with great precision.

The above and other objects and features of the present invention will become more apparent from the following description and preferred embodiments given in conjunction with the accompanying drawings, in which:

Fig.1       schematically illustrates in block diagram form a configuration of a conventional hybrid video encoder,

Fig. 2A      illustrates intra-prediction according to the H.264/AVC standard,

Fig. 2B      illustrates the set of predefined intra-prediction modes according to the H.264/AVC standard,

Fig. 3       schematically illustrates in block diagram form the configuration of a conventional hybrid video decoder,

Fig. 4       schematically illustrates the method for detecting an edge and estimating its direction,

Fig. 5       is a flowchart illustrating the edge detection process according to an embodiment of the present invention,

Fig. 6       is a flowchart illustrating the process for determining the set of prediction modes according to an embodiment of the present invention,

Fig. 7       is a flowchart illustrating the process of encoding image or video data based on intra-prediction according to an embodiment of the present invention,

Fig. 8       is a flowchart illustrating the process for computing the angle of an edge according to an embodiment of the present invention,

Fig. 9A      is a schematic drawing illustrating edge prediction employing extrapolation of previously coded image data in accordance with an embodiment of the present invention,

Fig. 9B      is a schematic drawing further illustrating edge prediction employing extrapolation of previously coded image data in accordance with an embodiment of the present invention,

Fig. 10      is a schematic drawing illustrating edge prediction employing interpolation of previously coded image data in accordance with an embodiment of the present invention,

Fig. 11    is a flowchart illustrating the process for computing the edge prediction according to an embodiment of the present invention,

Fig. 12    is a schematic drawing illustrating edge prediction based on more than one edge in accordance with another embodiment of the present invention,

Fig. 13    is a flowchart illustrating the process of decoding image and video data based on intra-prediction according to an embodiment of the present invention,

Fig. 14    is a flowchart illustrating the process for intra-prediction according to an embodiment of the present invention,

Fig. 15A   is a rate distortion curve for the first 10 frames of the sequence Foreman (CIF),

Fig. 15B   is a rate distortion curve for the sequence SpinCalendar (720p), and

Fig. 16    is a chart indicating the percentage of blocks using the edge prediction mode and bitrate reduction.

DETAILED DESCRIPTION

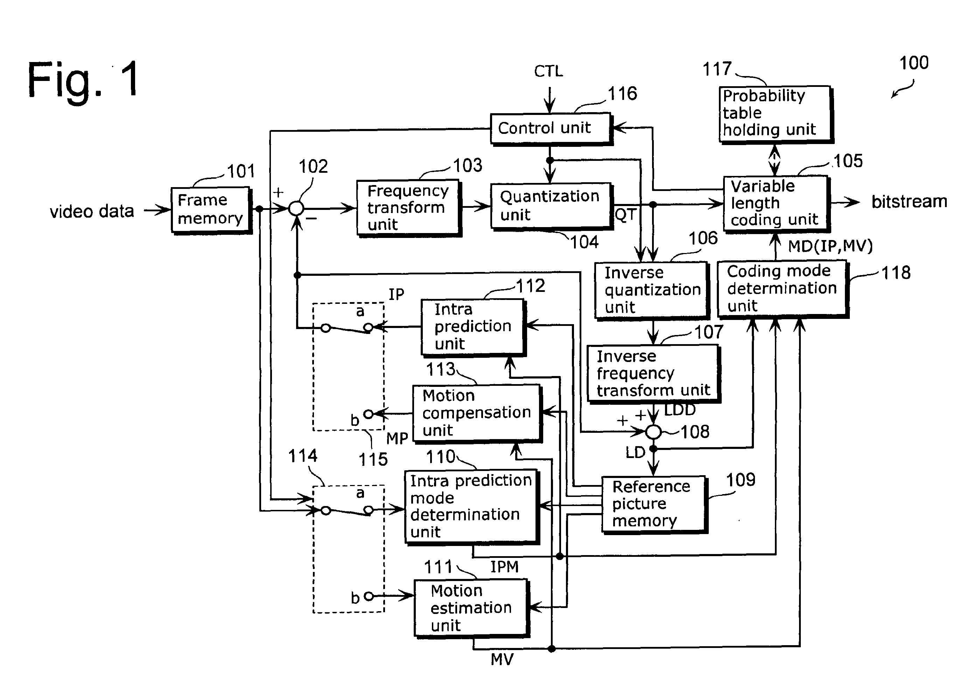

Referring to Fig. 1, an example of a hybrid video encoder is illustrated. The video encoder, generally denoted by reference numeral 100, comprises a frame memory 101, a subtracting unit 102, a frequency transform unit 103, a quantization unit 104, a variable length coding unit 105, an inverse quantization unit 106, an inverse frequency transform unit 107, an adding unit 108, a reference picture memory 109, an intra prediction mode determination unit 110, an intra prediction unit 112, a control unit 116 and a probability table holding unit 117.

Each frame of the input video data is stored in the frame memory 101 and then outputted from the frame memory 101 on a block-by-block basis (e.g. in units of macroblocks having horizontal 16 pixels and vertical 16 pixels).

Each macroblock can either be coded in intra or in inter prediction mode. In case of intra-frame prediction, the macroblock outputted from the frame memory 101 is inputted to the intra prediction mode determination unit 110 (the switch 114 is connected to "a" by the control unit 116). The intra prediction mode determination unit 110 determines how to perform intra prediction on the inputted macroblock. As an intra prediction mode (IPM), it is necessary to determine an intra prediction block size (one of the following sizes: horizontal 4 pixels x vertical 4 pixels; horizontal 8 pixels x vertical 8 pixels; and horizontal 16 pixels x vertical 16 pixels), and an intra prediction direction. A current block 210 in Fig. 2A may for instance be predicted according to eight predefined intra-prediction directions using pixel group 220. Here, it is assumed that reference pixels (pixels shown as diagonally hatched squares in Fig. 2A) to be used for the intra prediction have already been coded and stored in the reference picture memory 109. The information indicating the determined intra prediction mode IPM is outputted to the intra prediction unit 112 and the variable length coding unit 105.

The intra prediction unit 112, based on the intra prediction mode IPM determined by the intra prediction mode determination unit 110, obtains intra reference pixels from the reference picture memory 109, generates an intra-predicted image IP, and outputs the intra-predicted image IP to the subtracting unit 102.

The subtracting unit 102 receives the macroblock of the input picture from the frame memory 101 and the intra-predicted image IP generated by the intra prediction unit 112, generates a differential image between the macroblock and the intra-predicted image IP, and outputs the differential image to the frequency transform unit 103.

The frequency transform unit 103 performs a frequency transformation, such as a discrete cosine transformation, on the differential image generated by the prediction unit 112, and outputs frequency transform coefficients.

The quantization unit 104 performs quantization of the frequency transform coefficients generated by the frequency transform unit 103, and outputs the quantized frequency transform coefficients QT. Here, the quantization is a process of dividing the frequency transform coefficients by a predetermined value (quantization step). It is assumed that this quantization step is given by the control unit 116 (the quantization step may be included in a control signal CTL from the control unit 106). The quantized frequency transform coefficients QT are outputted to the variable length coding unit 105 and the inverse quantization unit 106.

The quantized frequency transform coefficients QT are inverse quantized by the inverse quantization unit 106, inverse frequency transformed by the inverse frequency transform unit 107, and become a decoded differential image LDD. The decoded differential image LDD is added to the predicted image IP or MP in the adding unit 108, becomes a decoded image LD, and stored in the reference picture memory 109. The decoded image LD stored in the reference picture memory 109 is used in a later coding as a reference picture.

The variable length coding unit 105 performs variable length coding on the quantized frequency transform coefficients QT inputted from the quantization unit 104, information indicating the prediction mode IPM inputted from the intra prediction mode determination unit 110 and the like, and outputs a bitstream, which is also referred to as a code sequence.

Here, as a method of the variable length coding method used in the variable length coding unit 105, there is a context adaptive arithmetic coding method adopted in the international standard moving picture coding method H.264. The context adaptive arithmetic coding method is a method of switching the probability tables used for arithmetic coding according to the variable length coding target data and data on which the variable length coding has already been performed (context adaptation). For example, as a context for performing variable length coding of the quantized frequency transform coefficients QT, a block size for intra prediction and a block size for frequency transformation and the like are used. Here, it is assumed that the probability tables are held in the probability table holding unit 117.

In case of inter prediction, the macroblock outputted from the frame memory 101 is inputted to the motion estimation unit 111 (the switch 114 is connected to "b" by the control unit 116). The motion estimation unit 111 estimates, for the inputted macroblock, the motion (motion vector) to the reference picture (a coded picture that is held in the reference picture memory 109 and is different from the picture to be coded). In the motion estimation, generally the following motion vector is selected: the motion vector having a minimum differential value between the block to be coded and a predictive image (an image in the reference picture referred by the motion vector) and a minimum sum of weights for coding amount of the motion vector. The estimated motion vector is outputted to the motion compensation unit 113 and the coding mode determination unit 118.

The motion compensation unit 113 generates a predicted image MP by obtaining inter reference pixels from the reference picture memory 109 based on the motion vector determined by the motion estimation unit 111, and outputs the predicted image MP to the subtracting unit 102 (the switch 115 is connected to "b" by the control unit 116).

The processing performed by the subtracting unit 102, the frequency transform unit 103, the quantization unit 104, the inverse quantization unit 106, the inverse frequency transform unit 107 and the adding unit 108 is same as the processing described in the case of intra prediction. Therefore, the explanation about the processing is omitted here.

The coding mode determination unit 118 determines a coding mode of a macroblock to be coded using outputs from the intra prediction mode determination unit 110, motion estimation unit 111, quantization unit 104, frame memory 101, and adding unit 108, and the like. Here, it is determined which one of the intra-picture prediction coding and the inter-picture prediction coding is used for coding the macroblock to be coded. For determining the coding mode, in general, the coding mode having the smallest value of the sum of weights between the amount of bits to be generated and the coded distortion is selected. In the case where the intra-picture prediction coding is selected as the coding mode, the information indicating the intra prediction mode IPM is outputted to the variable length coding unit 105, while the motion vector MV and the coding mode MD are outputted to the variable length coding unit 105 in the case where the inter-picture prediction coding is selected as a coding mode.

The variable length coding unit 105 performs variable length coding on a quantized frequency transform coefficients QT inputted from the quantization unit 104 and on the coding mode MD and the intra prediction mode IPM or the motion vector MV outputted from the coding mode determination unit 118, and outputs a bitstream.

Here, in the case where the variable length coding unit 105 codes the motion vector MV using a context adaptive arithmetic coding method, a method of changing a probability table depending on a size (context) of the motion vector of the coded peripheral block can be used. Here, it is assumed that the probability tables have been held in the probability table holding unit 117.

A prediction mode contains the full set of information that is required by the decoder to reproduce the prediction performed by the encoder in the process of encoding the video data. Therefore, a prediction mode defines the coding mode for each macroblock, i.e., whether intra or inter prediction is applied. Further, the prediction mode comprises information on how the macroblock is subdivided. According to H.264/AVC, a macroblock consists of 16x16 pixels that may, for instance in case of intra prediction, be further subdivided into blocks of 8x8 or 4x4 pixels each.

Depending on the coding mode, the prediction mode further specifies the set of motion vectors employed for motion compensation or the intra prediction mode applied to intra predict the block under consideration.

Figure 2 illustrates intra prediction modes as defined in the H.264/AVC standard. As shown in Fig. 2A, a block of 4x4 pixels 210 is predicted from previously encoded pixels 230 by extrapolating a set of thirteen reference pixels 220 located above and to the left of the pixel block 210 to be predicted. In order to perform the extrapolation, one out of eight possible extrapolation direction shown in Fig 2B is selected. In addition, a DC-mode may be selected, which employs the mean value of the reference pixels for predicting the current block 210.

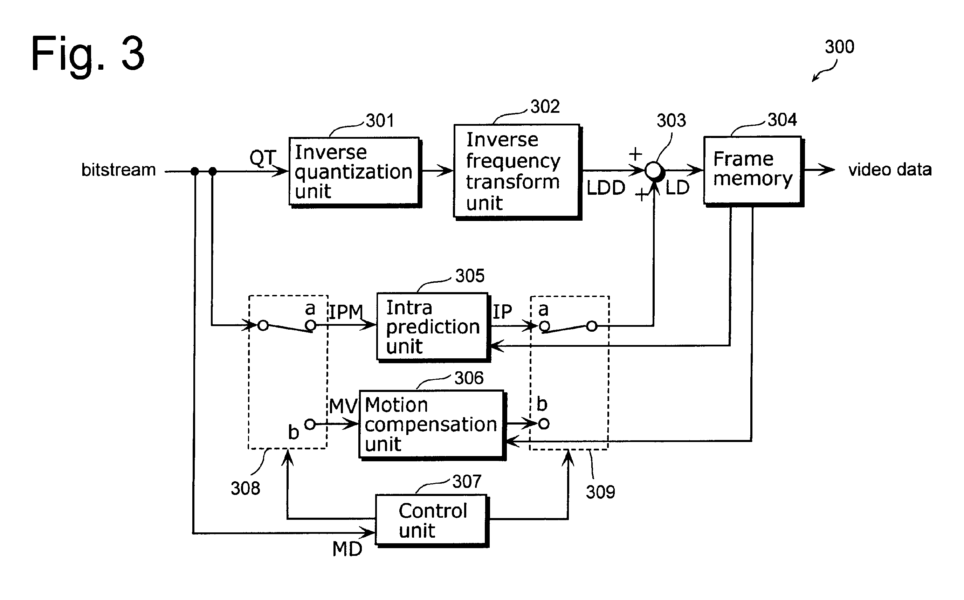

Referring to Figure 3, an example of a hybrid video decoder is illustrated. As shown in Fig. 3, the decoding unit 300 is made up of an inverse quantization unit 301, an inverse frequency transform unit 302, an adding unit 303, a frame memory 304, an inter prediction unit 305, a motion compensation unit 306, a control unit 307, and switches 308 and 309.

The decoding unit 300 decodes each block of the encoded video data either as an intra or inter-frame prediction coded block. The coding mode MD is inputted to the control unit 307, the information indicating the intra prediction mode IPM or the motion vector MV is inputted to the switch 308, and the quantized frequency transform coefficients QT are inputted to the inverse quantization unit 301.

The control unit 307 controls the switch 308 based on the coding mode MD. In the case where the coding mode MD indicates the intra prediction coding, the switch 308 is connected to "a", and the information indicating the intra prediction mode IPM is inputted to the intra prediction unit 305. In the case where the coding mode MD indicates the inter-picture prediction coding, the switch 308 is connected to "b", and the motion vector MV is inputted to the motion compensation unit 306.

In case of an intra prediction coded block, the switches 308 and 309 are connected to "a". The information indicating the intra prediction mode is thus inputted to the intra prediction unit 305 and the quantized frequency transform coefficients QT are inputted to the inverse quantization unit 301.

The intra prediction unit 305, based on the inputted intra prediction mode, obtains intra reference pixels from the frame memory 304, generates an intra-predicted image, and outputs the intra-predicted image to the adding unit 303.

The quantized frequency transform coefficients QT are inverse quantized by the inverse quantization unit 301, are further inverse frequency transformed by the inverse frequency transform unit 302, and become a decoded differential image LDD. The decoded differential image LDD is added to the intra-predicted image IP by the adding unit 303 so as to obtain the decoded image LD, and stored in the frame memory 304. The decoded image stored in the frame memory 304 is used as a reference picture in a later decoding. Also, it is outputted to form the decoded video data.

In case of an inter predicted block, the switches 308 and 309 are connected to "b". The coding mode MD is thus inputted to the control unit 307, the information indicating the intra prediction mode IPM or the motion vector MV is inputted to the switch 308, and the quantized frequency transform coefficients QT are inputted to the inverse quantization unit 301.

The motion compensation unit 306, based on the inputted motion vector MV, obtains reference pixels from the frame memory 304, generates a predicted picture, and outputs the predicted picture to the adding unit 303.

The processing of the inverse quantization unit 301, inverse frequency transform unit 302 and adding unit 303 are same as the processing explained in the case of intra predicted blocks. The decoded images LDs are stored in the frame memory 304. The decoded images stored in the frame memory 304 are used as reference pictures for the later decoding. Also, the decoded images are outputted to form the decoded video data.

If the current block contains a sharp edge, this block can only be intra predicted in one of a few predefined directions, cf. Fig. 2B. The result of the prediction may be unsatisfying if the direction of the edge cannot be well approximated by any of the predefined directions. Nevertheless, the predefined direction that is closest to the actual direction of the edge will generally be selected for predicting the current block. The predicted block will thus also contain an edge but with a direction that deviates from the actual direction of the original block. The differential image computed by subtracting the predicted block from the current block by the subtracting unit 102 will thus contain important high-frequency components, especially in the lower-right corner where pixels are the furthest from the reference pixels. These high-frequency components will either lead to a high bitrate or to distortions in the encoded image, depending on how the quantization of these parameters is handled in the quantization unit 104.

It is thus an aim of the present invention to improve intra-prediction of blocks exhibiting sharp edges. This is achieved by providing a new intra-prediction mode that takes the actual direction of the edge into account.

It is a further aim of the present invention to avoid any additional signaling overhead when introducing the new intra-prediction mode. This is achieved by estimating the direction of the edge from previously encoded blocks adjacent to the current block. This estimation may likewise be performed by the encoder and by the decoder so that it is not necessary to explicitly signal the direction of the edge to the decoder. Moreover, the conventional DC intra-prediction mode may be "overloaded" with the new intra-prediction mode, i.e., the encoder employs the very same code for signaling the conventional DC intra-prediction mode and the new intra-prediction mode. At the decoder side, the presence or absence of a sharp edge in the previously encoded blocks adjacent to the current block is employed for determining whether the conventional DC intra-prediction mode or the new intra-prediction mode has to be applied for predicting the current block.

Edges may be detected by computing the gradient vector field of the image data and evaluating the norm of the gradients, which reaches a maximum value on the edge. The direction of an edge may then be obtained from a vector that is perpendicular to the direction of the corresponding gradient.

Only the pixels belonging to blocks directly adjacent to the current block are considered, depending on the availability of these blocks, i.e., depending on whether these blocks have already been encoded or not. Gradient values are computed in the neighboring pixels using the vertical and horizontal Sobel operators:

$$Sobel_x = \begin{bmatrix} -1 & 0 & 1 \\ -2 & 0 & 2 \\ -1 & 0 & 1 \end{bmatrix}, \quad Sobel_y = \begin{bmatrix} -1 & -2 & -1 \\ 0 & 0 & 0 \\ 1 & 2 & 1 \end{bmatrix} \tag{1}$$

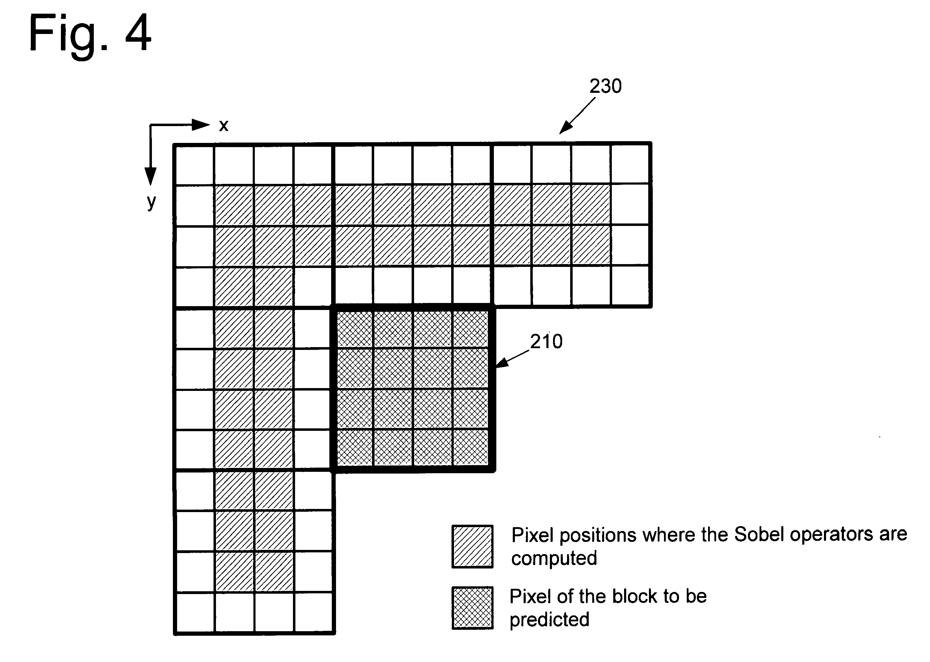

Figure 4 is a schematic drawing illustrating the method for detecting an edge and estimating its direction. The double hatched region represents the current block 210 which is to be predicted, and the diagonally hatched region represents pixels of surrounding blocks 230 that are considered for computing gradients.

From these values, an edge vector is derived for each neighboring pixel. Only vectors pointing to the current block are considered. The norm of each vector is computed; the strongest vector is kept and compared to a threshold. This threshold is empirically chosen, for instance based on a comparison of different maximum vector norms from different sequences containing both sharp edges and smooth areas.

When the norm of the maximum vector is lower than the threshold, no edge is detected, and the available prediction modes are identical to the nine conventional prediction modes used in the H.264 video coding standard.

When the norm of the maximum vector is equal or greater than the threshold, an edge is detected. In this case it is assumed that the DC mode is not a good candidate for predicting the current block, because this block is likely to contain a strong directional structure expensive to encode. Therefore, the DC mode is replaced by the edge prediction mode. The remaining eight directional prediction modes of the H.264 video coding standard, however, are kept. They are especially useful when a change in the edge direction occurs between the previous and the current blocks.

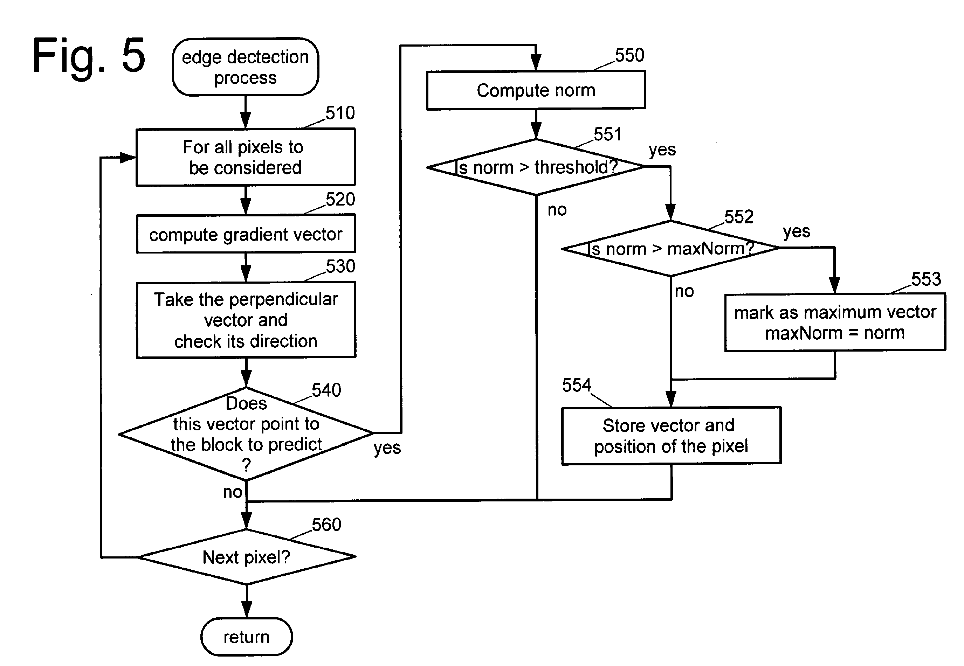

Figure 5 is a flowchart illustrating the edge detection process.

Steps 520 to 554 are performed for all pixels that are considered for computing gradients as indicated in Fig. 4. Specifically, the gradient at a current pixel position is computed in step 520 by applying the Sobel operators of Eq. (1). In step 530 it is determined whether the gradient may represent an edge that crosses the current block, i.e., whether a vector perpendicular to the gradient vector points to the current block. If this is not the case the process proceeds in step 560 to the next pixel, if any. Otherwise, it is determined in steps 550 and 551 whether the norm of the gradient vector exceeds a predetermined threshold. If this is not the case, the process proceeds to the next pixel. Otherwise, it is determined in step 552 whether the norm of the gradient vector is larger than the norm of a previously determined gradient vector that has the largest norm of all previously determined gradient vectors. If this is the case, the vector is marked as the new maximum vector in step 553. In any case, the vector and the position of the pixel are stored in step 554 and the process proceeds to the next pixel, if any.

According to an embodiment of the present invention, the set of intra-prediction modes that may be employed for encoding a block of image data may depend on the result of the edge detection process performed in adjacent, previously encoded blocks.

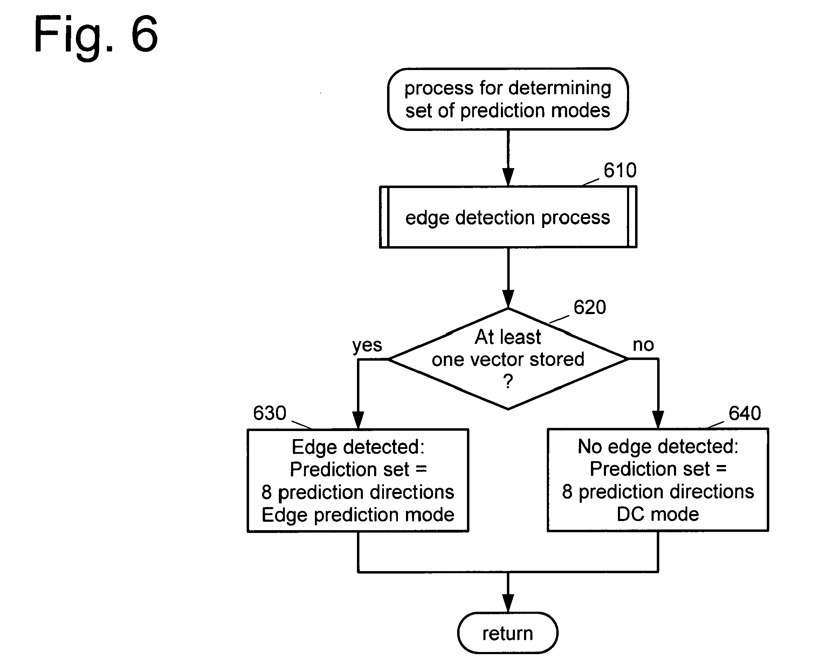

The process of selecting a suitable set of intra-prediction modes is illustrated in the flowchart of Fig. 6.

First of all, the edge detection process of Fig. 5 is performed in step 610. It is then determined in step 620, whether at least one vector has been stored, i.e., whether there is a gradient with a certain minimum norm and a direction that corresponds to an edge that crosses through the current block. If this is the case, the set of available intra prediction modes is defined in step 630 to consist of the eight conventional prediction directions (the directional prediction modes of the H.264 coding standard) and the new edge prediction mode. If this is not the case, the set of available intra prediction modes is defined in step 640 to consist of the nine conventional prediction modes of the H.264 coding standard, i.e., the eight conventional prediction directions and the conventional DC mode.

In a subsequent processing, the intra prediction mode determination unit 110 selects one intra prediction mode out of the set of available intra prediction modes defined in step 630 or 640 for performing intra-prediction by means of the intra-prediction unit 112.

Specifically, the standard H.264 rate distortion cost decision may be used with the set of available intra prediction modes to determine the best prediction to encode the block. Each prediction is computed and the residual is transformed and quantized. The block is coded and the bitrate and resulting distortion corresponding to each prediction mode are computed. The Lagrangian cost function $J$ used is

$$J = D + \lambda \cdot R \text{ ,} \qquad\qquad (2)$$

with R the bitrate used to encode the residual and the mode information, D the corresponding distortion and $\lambda$ the Lagrangian multiplier computed according to the QP chosen for the encoding. The mode with the lowest cost function is chosen to predict the block.

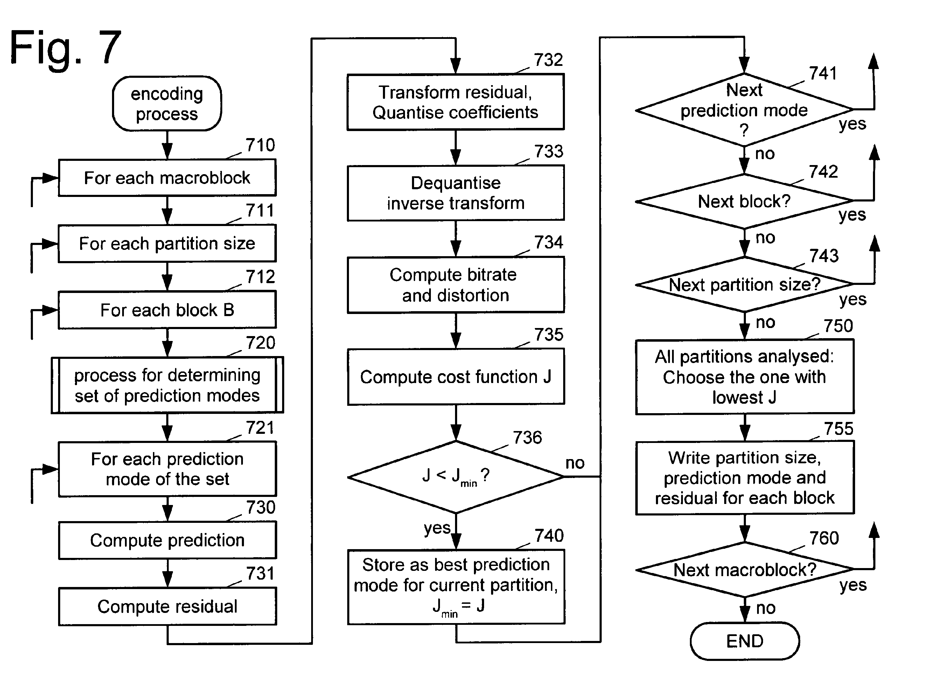

Figure 7 is a flowchart illustrating the process of encoding image or video data based on intra-prediction according to an embodiment of the present invention.

Steps 720 to 740 are performed for each macroblock of the current image or frame, each possible partition size (4x4, 8x8, 16x16), and each block of the macroblock. In step 720 a set of suitable intra-prediction modes is selected in accordance with the process described in conjunction with Fig. 6. The optimum prediction mode is then selected by performing steps 730 to 740 for each prediction mode of this set. Specifically, the current prediction mode is applied in step 730 to the current block $B$ in order to obtain the predicted block $B_{pred}$. This process will be described below in greater detail. The residual, i.e., the prediction error $B_{res}=B-B_{pred}$, is computed in step 731. The residual is subjected to transformation and quantization in step 732. The result is de-quantized and inverse transformed in step 733 so as to obtain $B_{resq}$. The resulting distortion $D=B-(B_{pred}+B_{resq})$, which is the difference between the original block and the decoded block, and bitrate $R=R_{res}+R_{mode}$, which is the sum of the bitrate required for coding the residual and the prediction mode, is determined in step 734 and the cost function $J=D+\lambda R$ is evaluated in step 735. In step 736 it is determined whether the current value of the cost function is less than a previously stored minimum value or not. If this is the case, the current prediction mode and the current partitioning are stored and the previously stored minimum value is updated by the current value of the cost function (step 740).

Once all partitions have been analyzed, the partition with the lowest value of the cost function and the corresponding prediction modes are selected in step 750. In step 755, the selected partition size, prediction modes, and the corresponding residual are written to the output bitstream, i.e., encoded for instance by means of a statistical coder. The process is then repeated in step 760 for the next macroblock, if any.

In the following, the new edge prediction mode is explained in further detail.

As explained above, the gradients of the surrounding pixels are computed, and focus is put on the one having the maximum norm. When an edge is detected for one block, the vectors of the pixels directly adjacent to the pixel that gave the maximum vector are analyzed. For each one of the directly adjacent pixels, the norm of the corresponding gradient vector is compared to the norm of the maximum vector and to the threshold. The vector is kept only if its norm is greater than the threshold and greater than 50% of the norm of the maximum vector. The angle of this vector is also analyzed: the vector is kept only if it points to the block to predict.

After this analysis, there is at least one vector indicating the direction of the edge in this region of the image: the maximum vector and the surrounding vectors that have been kept. The angle $\alpha$ of the direction for the new prediction mode is the average of the angles of these vectors.

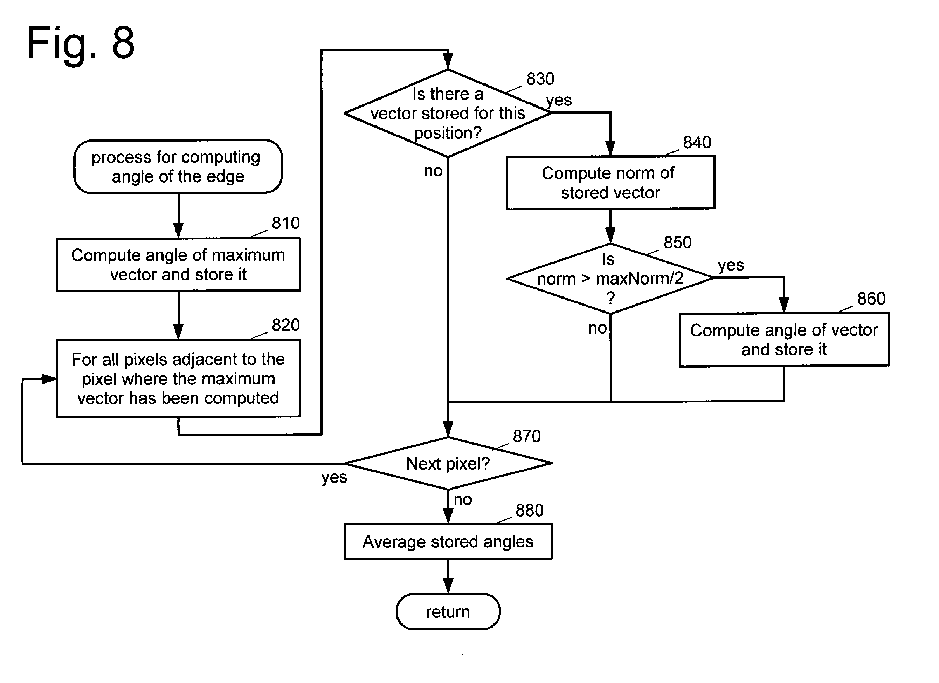

Figure 8 is a flowchart illustrating the process for computing the angle of an edge according to an embodiment of the present invention. This process relies on the results of the edge detection process described in conjunction with Fig. 5.

In step 810, the angle of the maximum gradient vector determined by the edge detection process is computed and stored. Then, all steps 830 to 860 are performed for all pixels that are adjacent to the pixel at which the maximum gradient vector has been computed. In step 830 it is determined whether there is a vector stored for the current position, i.e., whether there is a gradient having a norm larger than the threshold and having an orthogonal vector pointing to the current block. If this is the case, the norm of this vector is computed in step 840 and compared to the norm of the maximum vector in step 850. If the norm is larger than 50% of the maximum norm, the angle of the vector at the current pixel position is computed and stored. Finally, when all neighboring pixel positions are processed, the angle of the edge is computed as the average of all stored angles.

It is to be noted that the above processes for detecting an edge and determining its angle are merely exemplary. The present invention is not limited to any particular method for detecting edges or determining their direction. In particular, the angle may also be determined from the direction of the maximum gradient vector only or from a greater or smaller number of neighboring vectors or other vectors along the edge.

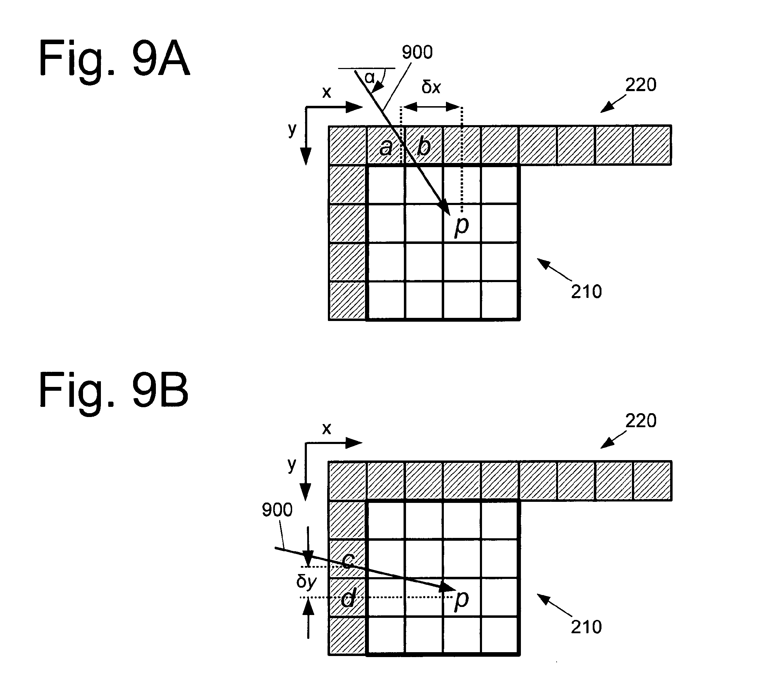

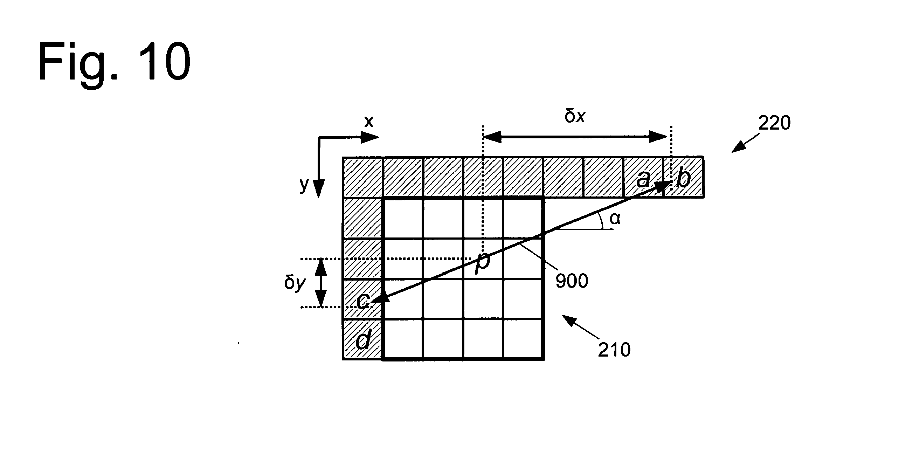

Figures 9 and 10 are a schematic drawings illustrating the inventive edge prediction mode. According to this mode, the current block is predicted by extrapolating previously coded video data along a certain direction. In contrast to conventional directional intra-prediction modes, the inventive edge prediction mode is capable of predicting the current block along an arbitrary direction. According to an embodiment of the present invention, this direction is determined by detecting edges in the previously coded image data.

As indicated in Fig. 9A, the current block 210 is predicted by an extrapolation of the previously encoded (or decoded) video data, more specifically, by a continuation of the reference pixels 220 along the direction 900 of detected edge.

In order to preserve the sharpness of the edge, linear interpolation among the reference pixels 220 is employed to compute the prediction value of a pixel, if a parallel translation of the reference pixels along the determined angle $\alpha$ does not coincide with full-pel positions. For each pixel to predict at position $(x, y)$, a reference position $x-\delta_x$ is found depending on the angle $\alpha$ of the edge, which is indicated by line 900. The reference value at the reference position is then computed by linearly interpolating the two surrounding full-pel reference pixels a and b. The thus computed reference value is then used as the prediction value of the pixel to be predicted. The reference pixels are taken only among pixels 220 directly adjacent to the current block 210.

Specifically, the prediction value $p$ is computed as a weighted sum of the pixel values a and b of the two reference pixels,

$$p=w_a a+w_b b \qquad\qquad (3)$$

with $w_a=\delta_x$-*floor*$(\delta_x)$ and $w_b$=*ceil*$(\delta_x)$-$\delta_x$. The horizontal increment $\delta_x=y\cot\alpha$ is computed from the angle of the detected edge and the position of the pixel that is to be predicted within the block.

A similar equation with horizontal increments replaced by vertical increments is employed, if the line 900 through the pixel and parallel to the detected edge crosses the left border rather than the upper border of the current block. This situation is illustrated in Fig. 9B. Here, the vertical increment is $\delta_y=x\tan\alpha$ and the prediction value $p$ for a pixel at position $(x, y)$ in terms of the reference pixel values c and d is

$$p=w_c c+w_d d \qquad\qquad (4)$$

with $w_c=\delta_y$-*floor*$(\delta_y)$ and $w_d$=*ceil*$(\delta_y)$-$\delta_y$.

As indicated in Fig. 10, there may be two relevant reference positions, if the line 900 through the pixel and parallel to the detected edge crosses the left border of the current block as well as its upper border or the upper border of the block right to the current block. In this case, the current block 210 may be predicted by an interpolation of previously encoded video data rather than by an extrapolation, so that both reference positions are used for prediction. The prediction value is the result of a linear interpolation of the interpolated pixel values at the two reference positions.

Specifically, the prediction value $p$ may be computed as a weighted sum of the four reference pixel values a, b, c, and d, for instance as

$$p=\frac{w_{up}}{w_{up}+w_{left}}\left(w_a a+w_b b\right)+\frac{w_{left}}{w_{up}+w_{left}}\left(w_c c+w_d d\right), \qquad\qquad (5)$$

with $w_{up}=N-y$, $w_{left}=N-x$, and $N=4$ or $N=8$, depending on the block size. Another possibility would be to compute the real interpolation between the two reference positions, i.e., with $w_{up}$ and $w_{left}$ being the Euclidean distance to the two reference positions.

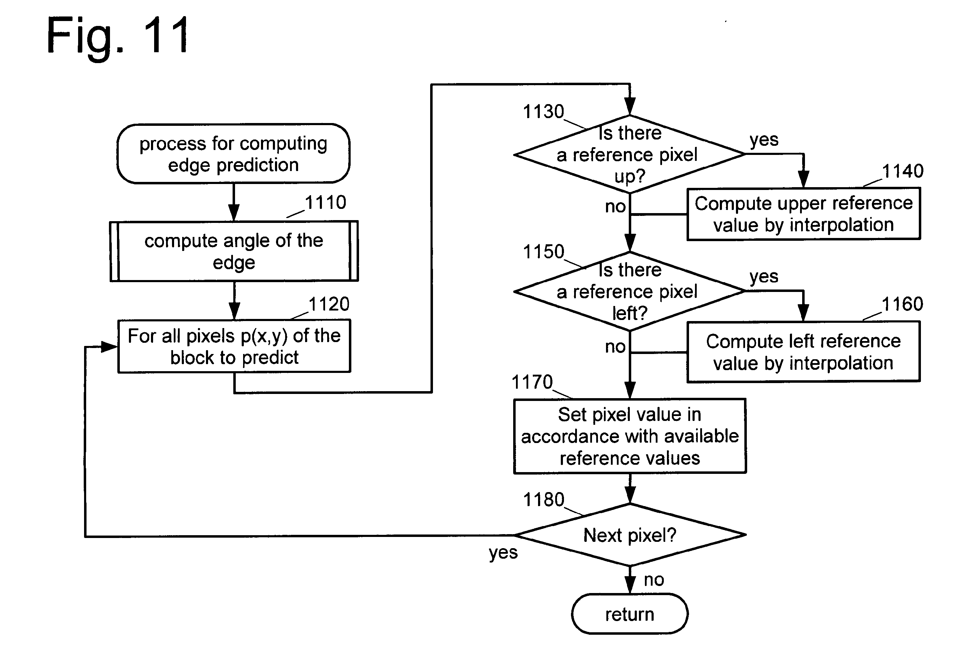

Figure 11 is a flowchart illustrating the process for computing the edge prediction according to an embodiment of the present invention. First of all, the angle of the edge is determined in step 1110, for instance in accordance with the process described in conjunction with Fig. 8. The following steps 1130 to 1170 are performed for all pixels of the current block to be predicted. In step 1130 it is determined, whether there is a reference pixel at the computed angle above of the current pixel; cf. Fig. 9A. If this is the case, an upper reference value $r_{up}$ is computed in step 1140 in accordance with Eq. (3). It is then determined in step 1150 whether there is a reference pixel at the computed angle left from the current pixel; cf. Fig. 9B. If this is the case, a left reference value $r_{left}$ is computed in step 1160 in accordance with Eq. (4). In step 1170, the prediction value of the current pixel is set in accordance with the availability of the upper and the left reference value. If both are available, the pixel value is set to $p=(w_{up}r_{up}+w_{left}r_{left})/(w_{up}+w_{left})$. If only the upper or the left reference value is available, the pixel value is set to $p=r_{up}$ and $p=r_{left}$, respectively. If neither of them is available, the current pixel value is set to the mean of the previously predicted, adjacent pixels, i.e., $p(x,y)=1/3[p(x-1,y-1)+p(x-1,y)+p(x,y-1)]$. This process is repeated in step 1180 for the remaining pixels, if any.

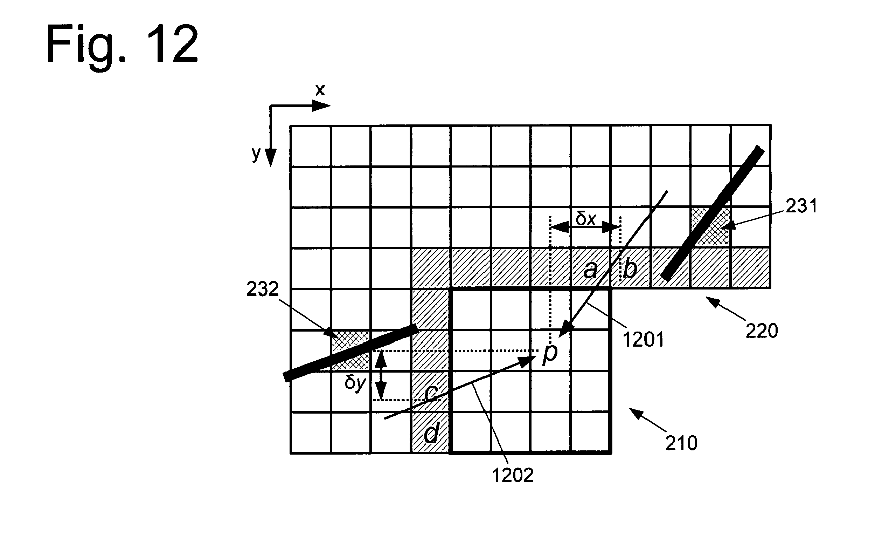

Figure 12 illustrates another embodiment of the present invention, wherein pixels are predicted in accordance with two or more directions. In case that two strong edges having different orientations (1201, 1202), but pointing both to the current block, are detected in two non-adjacent pixels (231, 232), pixel values may be predicted by extrapolating previously coded image data (220) along either of the two directions or, more preferably, by combining the two results. The two results may be combined by computing a weighted sum as in Eq. (5). The horizontal and the vertical increments, however, will be calculated from the direction (angle) of the first and the second edge, respectively. It is to be noted that the present invention is neither restricted with respect to the number of edges and directions that are employed for prediction nor with respect to the way in which the individual results are combined.

In order to preserve the sharpness of each of these edges, the weights for combining the individual extrapolation results may also be computed in accordance with a distance of each pixel to be predicted from a straight continuation of each of the detected edges. Specifically, the weights $w_{left}$ and $w_{up}$ may be set to 1 and 0, respectively, for all pixels that are crossed by an edge detected within a block to the left of the current block. Vice versa, the weights $w_{left}$ and $w_{up}$ may be set to 0 and 1, respectively, for all pixels that are crossed by an edge detected within a block above of the current block. The weights for the remaining pixels, i.e., the pixels that are not crossed by any of the detected edges, may be set as described above.

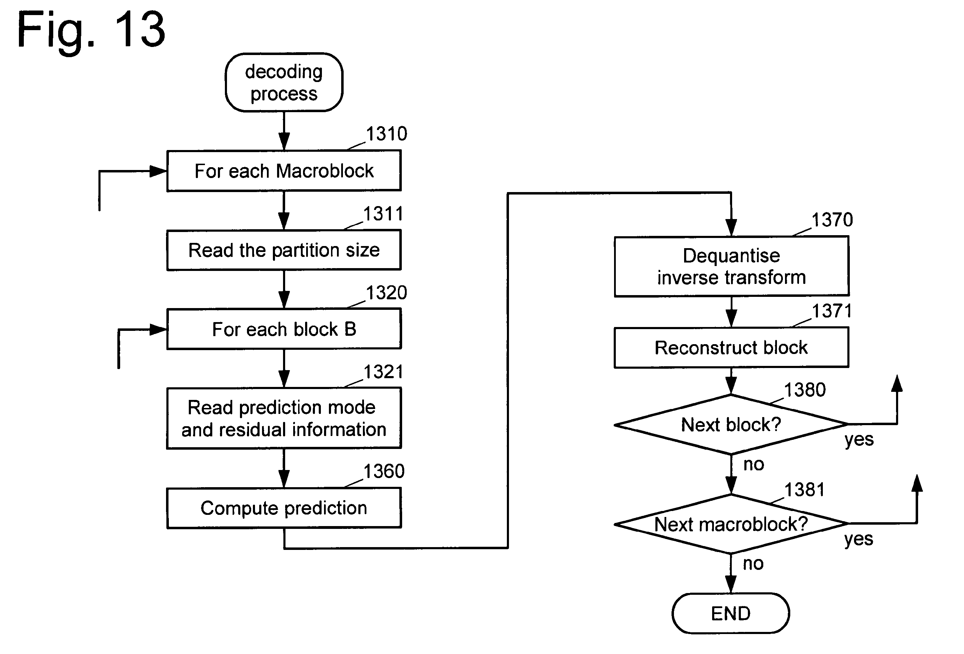

Figure 13 is a flowchart illustrating the process of decoding image and video data based on intra-prediction according to an embodiment of the present invention.

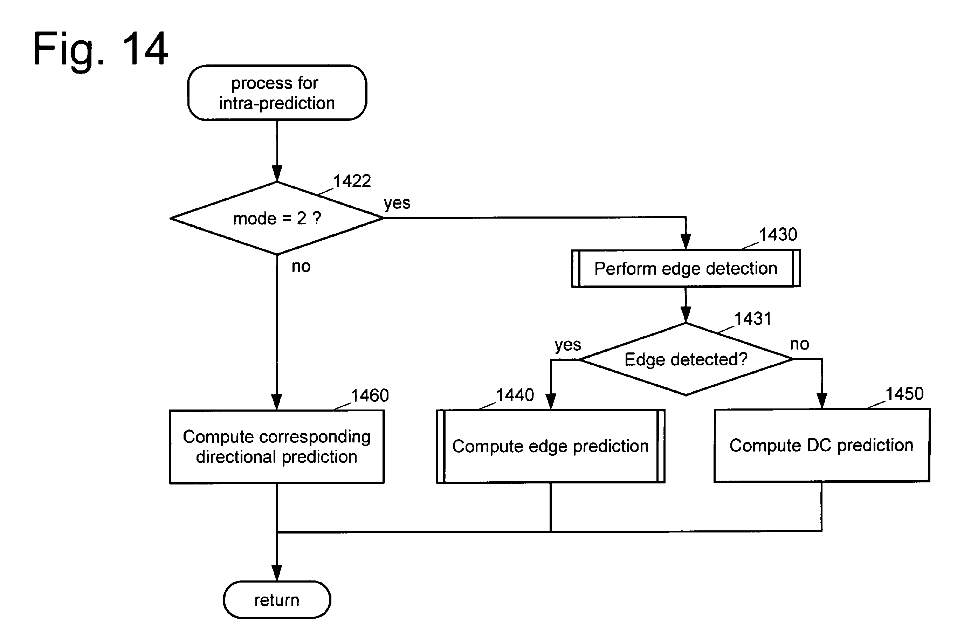

Steps 1311 to 1380 are repeated for each macroblock of the current image or frame. In step 1311, the partition size is read from the input bitstream, i.e., decoded my means of a statistical decoder. Steps 1321 to 1371 are repeated for each block of the current macroblock in accordance with the partition size. In step 1321, the prediction mode of the current block and its residual is read from the input bitstream. Based on the read prediction mode, the prediction of the current block is computed in step 1360. This process is described below in further detail in conjunction with Fig. 14. In step 1370 the residual information is dequantized and subjected to inverse transformation. In step 1371, the current block is reconstructed by adding the prediction and the inverse transformed residual and the processing proceeds with the next block or the next macroblock, if any.

Figure 14 is a flowchart illustrating the process for computing the intra-prediciton according to an embodiment of the present invention.

In step 1422 it is determined whether the prediction mode is equal to 2 or not. If the prediction mode is equal to 2, the processing proceeds to step 1430, wherein edge detection is performed. The edge detection process has been described above in conjunction with Fig. 5. In step 1431 it is determined whether an edge has been detected or not. If an edge has been detected, the current block is predicted in accordance with the inventive edge prediction mode described above in conjunction with Fig. 11. If no edge has been detected, the current block is predicted in accordance with the conventional DC prediction mode. On the other hand, if the prediction mode is different from 2, the current block is predicted in step 1460 in accordance with the conventional directional prediction mode indicated by the prediction mode.

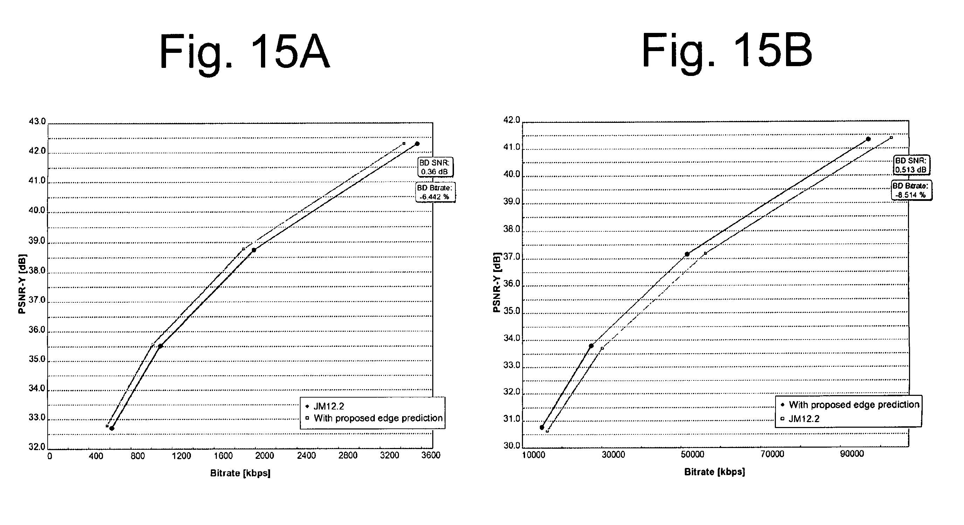

The high precision edge prediction method is useful to encode frames with sharp linear edges, where significant improvements can be obtained. As an example, the results obtained for the sequences Foreman and SpinCalendar are illustrated in Figs. 15A and 15B.

Experimental results show that a significant improvement of up to 8% of bitrate reduction can be obtained for sequences containing lots of sharp edges. It turned out that the results for Foreman were better if only the first 10 frames of the sequence (6,44% of bitrate reduction) rather than 300 frames were taken. The reason is that the sequence Foreman contains lots of sharp linear edges at the beginning of the sequence. In these frames, the edge prediction mode is often selected (for about 15% of the blocks on average) and the edges are better predicted. On the other hand, there are very few edges at the end of the sequence. In these frames, the edge prediction mode is almost never used (for only about 3% - 4% of the blocks on average). That is why the mean bitrate improvement for the whole sequence is only of 3,37%.

These results do also show that the performance of the edge prediction is highly content dependent. For images with very few edges or blurred edges, the edge prediction mode is almost never used. For such sequences, there is no gain as compared to the conventional coding method, but there is no loss either, because the DC mode is almost always used in the prediction set. Such images are encoded with the nine standard prediction modes of H.264.

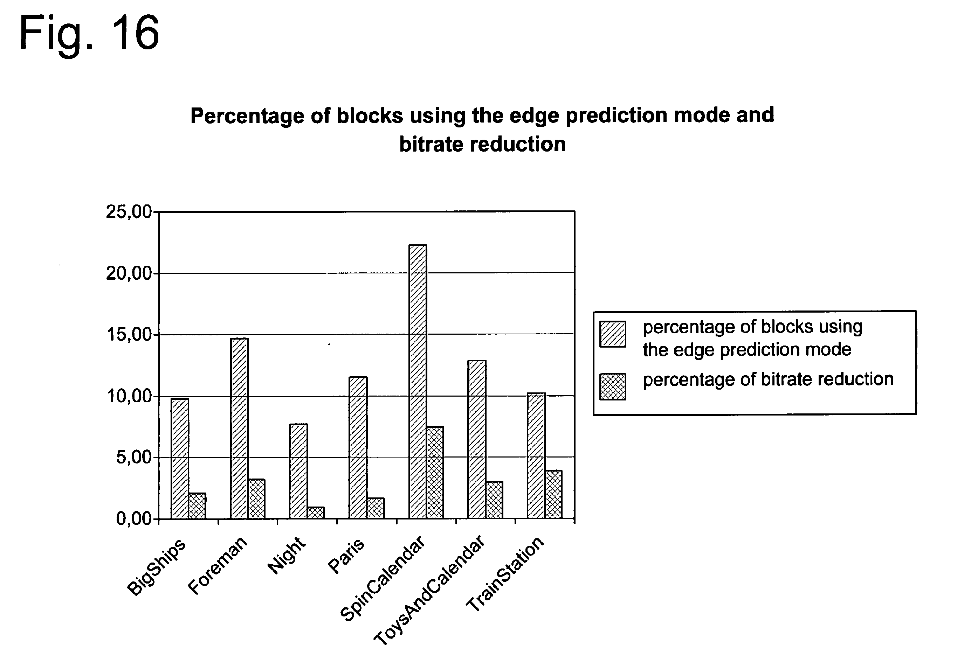

The graph in Fig. 16 indicates the percentage of blocks using the edge prediction mode for different sequences as well as the bitrate reduction obtained.

The following table contains the results for the high precision edge prediction technique in terms of bitrate reduction and PSNR improvement for the sequences simulated.

|  | Average bitrate reduction | Average PSNR improvement |
|---|---|---|
| Foreman (CIF) | 3,37% | 0,20 dB |
| Paris (CIF) | 1,67% | 0,15 dB |
| ToysAndCalendar (VGA) | 2,62% | 0,16 dB |
| TrainStation (VGA) | 4,62% | 0,23 dB |
| BigShips (720p) | 1,97% | 0,11 dB |
| SpinCalendar (720p) | 8,51% | 0,51 dB |

The results can differ a lot between different sequences. There is no linear relationship between the frequency of use of the edge prediction mode and the final gain, but the best gains are obtained for the images containing lots of edges easily predicted with the edge prediction mode.

According to the above described embodiment of the present invention, Sobel operators are employed to detect edges. The present invention, however, is not restricted in this respect. Instead, any edge detection tool may be employed provided that the directionality of the detected edge is computed. The Sobel operators are only one possible edge detection technique.

Further, the above described method for computing the predicted pixel values may be replaced by any other method, which takes the direction of the detected edge duly into account, without departing from the present invention. In particular, more or other reference pixels may be employed instead of the pixels that are directly adjacent to the block to be predicted.

Further, the present invention is not restricted to the H.264 video coding standard or to the set of conventional intra-prediction modes described above. In fact, the inventive edge prediction mode can also be used in any block-based video encoder using spatial prediction. In particular, it could be used as an additional mode in H.264/AVC rather than as a replacement of the DC mode.

Further, the inventive edge prediction mode may also be employed in conjunction with a signaling mechanism that is different from the above described combined signaling of the edge prediction mode and the DC mode. In particular, the edge prediction mode may be signaled by a dedicated code word independently of the DC mode or in combination with one or more of the predefined directional prediction modes.

Finally, the present invention is not limited to video coding applications but can also be used for block-based still image coding.

Summarizing, the present invention relates to encoding and decoding of image and video data, and in particular to a new spatial prediction mode for predicting a block of image data from image data of previously encoded/decoded blocks. According to this prediction mode, blocks containing sharp edges may be predicted more faithfully by taking the precise direction of the edge into account. Moreover, the new prediction mode does not require any additional signaling overhead, because (i) the direction of the edge is estimated from previously encoded blocks and (ii) the new prediction mode replaces the conventional DC mode for blocks containing sharp edges.

**Claims**

1. A method for encoding image data, said method comprising the steps of:

   partitioning (710-712) the image data into a plurality of blocks in order to encode the image data on a block-by-block basis; and
   predicting (730) a current block (210) from image data of previously encoded blocks;
   **characterized by**
   detecting (510-560; 610) an edge within previously encoded blocks adjacent to the current block (210); and

   wherein the current block (210) is predicted by extra-/interpolating (1110-1180) previously encoded image data (230) along a direction (900) of the detected edge.

2. A method according to claim 1, wherein the extra-/interpolation is based on pixel values of blocks adjacent to the current block (210).

3. A method according to claim 1 or 2, wherein the extra-/interpolation is a linear extra-/interpolation.

4. A method according to any of claims 1 to 3, wherein each pixel (p) of the current block (210) is predicted by computing a weighted sum of at least two pixel values (a, b; c, d) of the previously encoded image data (230), the weights being determined based on the direction (900) of the detected edge.

5. A method according to claim 4, wherein the weights are further determined based on a location of the pixel to be predicted within the current block (210).

6. A method according to any of claims 1 to 5, wherein at least two edges with distinct directions (1201, 1202) are detected and each pixel (p) of the current block (210) is predicted by combining the results of extra-/interpolating previously encoded image data (230) along each of the distinct directions (1201, 1202).

7. A method according to claim 6, wherein the results of the of extra-/interpolation for each pixel (p) are combined by computing a weighted sum, the weights being determined based on a distance of the pixel to a previously encoded block the corresponding edge has been detected in.

8. A method according to claim 6 or 7, wherein the weights are further determined based on distances of the pixel to straight continuations of the at least two edges.

9. A method according to any of claims 1 to 8, further comprising the step of:

   selecting (721, 740) a prediction mode from a plurality of prediction modes;

wherein the current block (210) is predicted in accordance with the selected prediction mode.

10. A method according to claim 9, wherein the prediction mode is selected in accordance with at least one of the resulting bitrate and the resulting distortion of the encoded image.

11. A method according to claim 9 or 10, wherein the plurality of prediction modes comprises an edge prediction mode, and wherein the current block (210) is predicted in accordance with the direction (900) of the detected edge if the edge prediction mode has been selected.

12. A method according to claim 11, wherein the plurality of prediction modes further comprises a DC prediction mode and a plurality of predefined directional prediction modes, and wherein the current block (210) is predicted in accordance with a mean of previously encoded image data (230) if the DC prediction mode has been selected, and wherein the current block (210) is predicted in accordance with a predefined direction if one of the predefined directional prediction modes has been selected.

13. A method according to claim 12, wherein one of the edge prediction mode and the plurality of predefined directional prediction modes is selected, if an edge is detected, and wherein one of the DC prediction mode and the plurality of predefined directional prediction modes is selected, if an edge is not detected.

14. A method according to claim 12, wherein one of the edge prediction mode and the plurality of predefined directional prediction modes is selected, if an edge is detected and the direction (900) of the detected edge points to the current block (210), and wherein one of the DC prediction mode and the plurality of predefined directional prediction modes is selected otherwise.

15. A method according to claim 13 or 14, further comprising the step of encoding (755) a prediction mode indicator indicating the selected directional prediction mode, if one of the predefined directional prediction modes has been selected, and either of the DC prediction mode and the edge prediction mode, if the DC prediction mode or the edge prediction mode has been selected.

16. A method according to any of claims 9 to 14, further comprising the step of encoding (755) a prediction mode indicator indicating the selected prediction mode.

17. A method according to any of claims 1 to 16, further comprising the steps of
computing (520) a gradient vector for each of a plurality of pixels of previously encoded blocks adjacent to the current block (210); and
determining (540, 551), for each gradient vector, whether the norm of the gradient vector exceeds a predetermined threshold and whether a vector perpendicular to the gradient vector is pointing to the current block (210);
wherein an edge is detected if there is at least one gradient vector having a positive result of the determining step.

18. A method according to claim 17, wherein the direction (900) of the detected edge is obtained from the direction of the gradient having the largest norm among the gradients having a positive result of the determining step.

19. A method according to claim 17, wherein the direction (900) of the detected edge is obtained by averaging the directions of at least a subset of the gradients having a positive result of the determining step.

20. A method for encoding video data, said method comprising the step of encoding image data of a block of the video data based on a method according to any of claims 1 to 19.

21. A method for decoding, on a block-by-block basis, image data partitioned into a plurality of blocks, said method comprising the step of
predicting (1360) a current block (210) from image data of previously decoded blocks,
and is **characterized by**
detecting (1430) an edge within previously decoded blocks adjacent to the current block (210),
wherein the current block (210) is predicted by extra-/interpolating previously encoded image data (230) along a direction (900) of the detected edge.

22. A method according to claim 21, wherein the extra-/interpolation is based on pixel values of blocks adjacent to the current block (210).

**23.** A method according to claim 21 or 22, wherein the extra-/interpolation is a linear extra-/interpolation.

**24.** A method according to any of claims 21 to 23, wherein each pixel (p) of the current block (210) is predicted by computing a weighted sum of at least two pixel values (a, b; c, d) of the previously decoded image data, the weights being determined based on the direction (900) of the detected edge.

**25.** A method according to claim 24, wherein the weights are further determined based on a location of the pixel to be predicted within the current block (210).

**26.** A method according to any of claims 21 to 25, wherein at least two edges with distinct directions (1201, 1202) are detected and each pixel (p) of the current block (210) is predicted by combining the results of extra-/interpolating previously decoded image data along each of the distinct directions (1201, 1202).

**27.** A method according to claim 26, wherein the results of the of extra-/interpolation for each pixel (p) are combined by computing a weighted sum, the weights being determined in accordance with a distance of the pixel to a previously decoded block the corresponding edge has been detected in.

**28.** A method according to claim 26 or 27, wherein the weights are further determined based on distances of the pixel to straight continuations of the at least two edges.

**29.** A method according to any of claims 21 to 28, further comprising the step of:

selecting (1321) a prediction mode from a plurality of prediction modes;

wherein the current block (210) is predicted in accordance with the selected prediction mode.

**30.** A method according to claim 29, wherein the plurality of prediction modes comprises an edge prediction mode, and wherein the current block (210) is predicted in accordance with the direction (900) of the detected edge if the edge prediction mode has been selected.

**31.** A method according to claim 30, wherein the plurality of prediction modes further comprises a DC prediction mode and a plurality of predefined directional prediction modes, and wherein the current block (210) is predicted in accordance with a mean of previously decoded image data if the DC prediction mode has been selected, and wherein the current block (210) is predicted in accordance with a predefined direction if one of the predefined directional prediction modes has been selected.

**32.** A method according to claim 31, wherein one of the edge prediction mode and the plurality of predefined directional prediction modes is selected, if an edge is detected, and wherein one of the DC prediction mode and the plurality of predefined directional prediction modes is selected, if an edge is not detected.

**33.** A method according to claim 31, wherein one of the edge prediction mode and the plurality of predefined directional prediction modes is selected, if an edge is detected and the direction (900) of the detected edge points to the current block (210), and wherein one of the DC prediction mode and the plurality of predefined directional prediction modes is selected otherwise.

**34.** A method according to any of claims 29 to 33, wherein the image data comprises a prediction mode indicator indicating a prediction mode, and wherein the prediction mode is selected in accordance with the prediction mode indicator.

**35.** A method according to claim 34, wherein the prediction mode is selected in accordance with the prediction mode indicator and a result of the detecting step.

**36.** A method according to claim 35, wherein, if the prediction mode indicator indicates the DC prediction mode or the edge prediction mode, the edge prediction mode is selected if an edge is detected in the detecting step, and the DC prediction mode is selected if an edge is not detected in the detecting step.

**37.** A method according to any of claims 21 to 36, further comprising the steps of
computing (520) a gradient vector for each of a plurality of pixels of previously decoded blocks adjacent to the current block (210); and

determining (540, 551), for each gradient vector, whether the norm of the gradient vector exceeds a predetermined threshold and whether a vector perpendicular to the gradient vector is pointing to the current block (210); wherein an edge is detected if there is at least one gradient vector having a positive result of the determining step.

38. A method according to claim 37, wherein the direction (900) of the detected edge is obtained from the direction of the gradient having the largest norm among the gradients having a positive result of the determining step.

39. A method according to claim 37, wherein the direction (900) of the detected edge is obtained by averaging the directions of at least a subset of the gradients having a positive result of the determining step.

40. A method for decoding video data, said method comprising the step of decoding image data of a block of the video data based on a method according to any of claims 21 to 39.

41. A codec for coding video data, the codec comprising:

> a method for encoding video data according to claim 20; and
> a method for decoding video data according to claim 40.

42. A computer program product comprising a computer readable medium having computer readable program code embodied thereon, the program code being adapted to carry out all steps of any of claim 1 to 41.

43. An encoder for encoding image data, said encoder comprising:

> a block partitioning unit (101) for partitioning the image data into a plurality of blocks in order to encode the image data on a block-by-block basis; and
> a prediction unit (112) for predicting a current block (210) from image data of previously encoded blocks, **characterized by**
> an edge detection unit for detecting an edge within previously encoded blocks adjacent to the current block (210); and

> wherein the prediction unit (112) is adapted for predicting the current block (210) by extra-/interpolating previously encoded image data (230) along a direction (900) of the detected edge.

44. An encoder according to claim 43, wherein the extra-/interpolation is based on pixel values of blocks adjacent to the current block (210).

45. An encoder according to claim 43 or 44, wherein the extra-/interpolation is a linear extra-/interpolation.

46. An encoder according to any of claims 43 to 45, wherein each pixel (p) of the current block (210) is predicted by computing a weighted sum of at least two pixel values (a, b; c, d) of the previously encoded image data (230), the weights being determined based on the direction (900) of the detected edge.

47. An encoder according to claim 46, wherein the weights are further determined based on a location of the pixel to be predicted within the current block (210).

48. An encoder according to any of claims 43 to 47, wherein at least two edges with distinct directions (1201, 1202) are detected and each pixel (p) of the current block (210) is predicted by combining the results of extra-/interpolating previously encoded image data (230) along each of the distinct directions (1201, 1202).

49. An encoder according to claim 48, wherein the results of the of extra-/interpolation for each pixel (p) are combined by computing a weighted sum, the weights being determined in accordance with a distance of the pixel to a previously encoded block the corresponding edge has been detected in.

50. An encoder according to claim 48 or 49, wherein the weights are further determined based on distances of the pixel to straight continuations of the at least two edges.

51. An encoder according to any of claims 43 to 50, further comprising

a prediction mode selection unit (110) for selecting a prediction mode from a plurality of prediction modes;
wherein the current block (210) is predicted in accordance with the selected prediction mode.

**52.** An encoder according to claim 51, wherein the prediction mode is selected in accordance with at least one of the resulting bitrate and the resulting distortion of the encoded image.

**53.** An encoder according to claim 51 or 52, wherein the plurality of prediction modes comprises an edge prediction mode, and wherein the current block (210) is predicted in accordance with the direction (900) of the detected edge if the edge prediction mode has been selected.

**54.** An encoder according to claim 53, wherein the plurality of prediction modes further comprises a DC prediction mode and a plurality of predefined directional prediction modes, and wherein the current block (210) is predicted in accordance with a mean of previously encoded image data (230) if the DC prediction mode has been selected, and wherein the current block (210) is predicted in accordance with a predefined direction if one of the predefined directional prediction modes has been selected.

**55.** An encoder according to claim 54, wherein one of the edge prediction mode and the plurality of predefined directional prediction modes is selected, if an edge is detected, and wherein one of the DC prediction mode and the plurality of predefined directional prediction modes is selected, if an edge is not detected.

**56.** An encoder according to claim 54, wherein one of the edge prediction mode and the plurality of predefined directional prediction modes is selected, if an edge is detected and the direction (900) of the detected edge points to the current block (210), and wherein one of the DC prediction mode and the plurality of predefined directional prediction modes is selected otherwise.

**57.** An encoder according to claim 55 or 56, further comprising a prediction mode encoder (105) adapted for encoding a prediction mode indicator indicating the selected directional prediction mode, if one of the predefined directional prediction modes has been selected, and either of the DC prediction mode and the edge prediction mode, if the DC prediction mode or the edge prediction mode has been selected.

**58.** An encoder according to any of claims 51 to 56, further comprising a prediction mode encoder (105) adapted for encoding a prediction mode indicator indicating the selected prediction mode.

**59.** An encoder according to any of claims 43 to 58, further comprising a computing means for computing (510) a gradient vector for each of a plurality of pixels of previously encoded blocks adjacent to the current block (210) and for determining (520, 530), for each gradient vector, whether the norm of the gradient vector exceeds a predetermined threshold and whether a vector perpendicular to the gradient vector is pointing to the current block (210);
wherein an edge is detected if there is at least one gradient vector having a positive determination result.

**60.** An encoder according to claim 59, wherein the direction (900) of the detected edge is obtained from the direction of the gradient having the largest norm among the gradients having a positive determination result.

**61.** An encoder according to claim 59, wherein the direction (900) of the detected edge is obtained by averaging the directions of at least a subset of the gradients having a positive determination result.

**62.** A video encoder for encoding video data, said video encoder comprising an encoder according to any of claims 43 to 61 for encoding image data of a block of the video data .

**63.** A decoder for decoding, on a block-by-block basis, image data partitioned into a plurality of blocks, said decoder comprising
a prediction unit (305) for predicting a current block (210) from image data of previously decoded blocks,
and is **characterized by**
an edge detection unit for detecting an edge within previously decoded blocks adjacent to the current block (210), wherein the prediction unit (305) is adapted for predicting the current block (210) by extra-/interpolating previously encoded image data (230) along a direction (900) of the detected edge.

**64.** A decoder according to claim 63, wherein the extra-/interpolation is based on pixel values of blocks adjacent to the current block (210).

**65.** A decoder according to claim 63 or 64, wherein the extra-/interpolation is a linear extra-/interpolation.

**66.** A decoder according to any of claims 63 to 65, wherein each pixel (p) of the current block (210) is predicted by computing a weighted sum of at least two pixel values (a, b; c, d) of the previously decoded image data, the weights being determined based on the direction (900) of the detected edge.

**67.** A decoder according to claim 66, wherein the weights are further determined based on a location of the pixel to be predicted within the current block (210).

**68.** A decoder according to any of claims 63 to 67, wherein at least two edges with distinct directions (1201, 1202) are detected and each pixel (p) of the current block (210) is predicted by combining the results of extra-/interpolating previously decoded image data along each of the distinct directions (1201, 1202).

**69.** A decoder according to claim 68, wherein the results of the of extra-/interpolation for each pixel (p) are combined by computing a weighted sum, the weights being determined in accordance with a distance of the pixel to a previously decoded block the corresponding edge has been detected in.

**70.** A decoder according to claim 68 or 69, wherein the weights are further determined based on distances of the pixel to straight continuations of the at least two edges.

**71.** A decoder according to any of claims 63 to 70, further comprising
a prediction mode selection unit (307) for selecting a prediction mode from a plurality of prediction modes;
wherein the current block (210) is predicted in accordance with the selected prediction mode.

**72.** A decoder according to claim 71, wherein the plurality of prediction modes comprises an edge prediction mode, and wherein the current block (210) is predicted in accordance with the direction (900) of the detected edge if the edge prediction mode has been selected.

**73.** A decoder according to claim 72, wherein the plurality of prediction modes further comprises a DC prediction mode and a plurality of predefined directional prediction modes, and wherein the current block (210) is predicted in accordance with a mean of previously decoded image data if the DC prediction mode has been selected, and wherein the current block (210) is predicted in accordance with a predefined direction if one of the predefined directional prediction modes has been selected.

**74.** A decoder according to claim 73, wherein one of the edge prediction mode and the plurality of predefined directional prediction modes is selected, if an edge is detected, and wherein one of the DC prediction mode and the plurality of predefined directional prediction modes is selected, if an edge is not detected.

**75.** A decoder according to claim 73, wherein one of the edge prediction mode and the plurality of predefined directional prediction modes is selected, if an edge is detected and the direction (900) of the detected edge points to the current block (210), and wherein one of the DC prediction mode and the plurality of predefined directional prediction modes is selected otherwise.

**76.** A decoder according to any of claims 71 to 74, wherein the image data comprises a prediction mode indicator indicating a prediction mode, and wherein the prediction mode is selected in accordance with the prediction mode indicator.

**77.** A decoder according to claim 76, wherein the prediction mode is selected in accordance with the prediction mode indicator and an output of the edge detection unit.

**78.** A decoder according to claim 77, wherein, if the prediction mode indicator indicates the DC prediction mode or the edge prediction mode, the edge prediction mode is selected if an edge is detected in the detecting step, and the DC prediction mode is selected if an edge is not detected in the detecting step.

**79.** A decoder according to any of claims 63 to 78, further comprising
a computing means for computing (510) a gradient vector for each of a plurality of pixels of previously decoded blocks adjacent to the current block (210), and for determining (520, 530), for each gradient vector, whether the norm of the gradient vector exceeds a predetermined threshold and whether a vector perpendicular to the gradient vector is pointing to the current block (210);
wherein an edge is detected if there is at least one gradient vector having a positive determination result.

80. A decoder according to claim 79, wherein the direction (900) of the detected edge is obtained from the direction of the gradient having the largest norm among the gradients having a positive determination result.

81. A decoder according to claim 79, wherein the direction (900) of the detected edge is obtained by averaging the directions of at least a subset of the gradients having a positive determination result.

82. A video decoder for decoding video data, said video decoder comprising a decoder according to any of claims 63 to 81 for decoding image data of a block of the video data.

83. A video coding system for coding video data, the system comprising:

a video encoder for encoding video data according to claim 62; and
a video decoder for decoding video data according to claim 82.

Fig. 1

Fig. 2A

Fig. 2B

EP 2 081 386 A1

# Fig. 3

EP 2 081 386 A1

# Fig. 4

Pixel positions where the Sobel operators are computed

Pixel of the block to be predicted

**Fig. 5**

edge dectection process

For all pixels to be considered — 510

compute gradient vector — 520

Take the perpendicular vector and check its direction — 530

Does this vector point to the block to predict ? — 540

Compute norm — 550

Is norm > threshold? — 551
yes / no

Is norm > maxNorm? — 552
yes / no

mark as maximum vector maxNorm = norm — 553

Store vector and position of the pixel — 554

Next pixel? — 560

return

EP 2 081 386 A1

# Fig. 6

process for determining
set of prediction modes

610
edge detection process

620
At least
one vector stored
?

yes

no

630
Edge detected:
Prediction set =
8 prediction directions
Edge prediction mode

640
No edge detected:
Prediction set =
8 prediction directions
DC mode

return

EP 2 081 386 A1

# Fig. 7

encoding process

For each macroblock — 710

For each partition size — 711

For each block B — 712

process for determining set of prediction modes — 720

For each prediction mode of the set — 721

Compute prediction — 730

Compute residual — 731

Transform residual, Quantise coefficients — 732

Dequantise inverse transform — 733

Compute bitrate and distortion — 734

Compute cost function J — 735

$J < J_{min}$ ? — 736 → no

yes → Store as best prediction mode for current partition, $J_{min} = J$ — 740

Next prediction mode ? — 741 → yes

no → Next block? — 742 → yes

no → Next partition size? — 743 → yes

no → All partitions analysed: Choose the one with lowest J — 750

Write partition size, prediction mode and residual for each block — 755

Next macroblock? — 760 → yes

no → END

EP 2 081 386 A1

Fig. 8

830 — Is there a vector stored for this position?

840 — Compute norm of stored vector

850 — Is norm > maxNorm/2 ?

860 — Compute angle of vector and store it

810 — process for computing angle of the edge → Compute angle of maximum vector and store it

820 — For all pixels adjacent to the pixel where the maximum vector has been computed

870 — Next pixel?

880 — Average stored angles

return

# Fig. 9A

# Fig. 9B

Fig. 10

# Fig. 11

process for computing
edge prediction

compute angle of the
edge $\quad$ 1110

For all pixels p(x,y) of the
block to predict $\quad$ 1120

1130 Is there
a reference pixel
up? — yes → Compute upper reference
value by interpolation $\quad$ 1140

no

1150 Is there
a reference pixel
left? — yes → Compute left reference
value by interpolation $\quad$ 1160

no

1170 Set pixel value in
accordance with available
reference values

1180 Next pixel?

yes

no

return

EP 2 081 386 A1

# Fig. 12

# Fig. 13

EP 2 081 386 A1

# Fig. 14

```
                  process for
                  intra-prediction

                         │
                         ▼
                      ╱──────╲        1422
                    ╱          ╲          yes
                  ╱   mode = 2 ? ╲ ──────────────────────────┐
                    ╲          ╱                             │
                      ╲──────╱                               ▼
                         │                          ┌──────────────────────┐ 1430
                         │ no                        │ Perform edge detection │
                         │                           └──────────────────────┘
                         │                                    │
                         │                                    ▼
                         │                                 ╱──────╲   1431
                         │                         yes   ╱          ╲   no
                         │                          ┌──╱ Edge detected? ╲──┐
                         │                          │   ╲              ╱   │
                         │                          │     ╲──────╱        │
                         ▼                          ▼                     ▼
              ┌──────────────────────┐ 1460  ┌──────────────────────┐1440  ┌──────────────────────┐ 1450
              │ Compute corresponding │      │ Compute edge prediction │    │ Compute DC prediction │
              │ directional prediction │     └──────────────────────┘      └──────────────────────┘
              └──────────────────────┘              │                          │
                         │                          └──────────┬───────────────┘
                         │                                     │
                         ◄─────────────────────────────────────┘
                         ▼
                      return
```

# Fig. 15A

# Fig. 15B

# Fig. 16

Percentage of blocks using the edge prediction mode and bitrate reduction

Europäisches
Patentamt
European
Patent Office
Office européen
des brevets

# EUROPEAN SEARCH REPORT

**Application Number**

EP 08 00 0979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/54416 A (NOKIA MOBILE PHONES LTD [FI]; KALEVO OSSI [FI]; VAHTERI JONI [FI]; DOB) 26 July 2001 (2001-07-26) | 1-3, 9-11,16, 20-23, 29,30, 40-45, 51-53, 58, 62-65, 71,72, 82,83 | INV. H04N7/26 |
| Y | * abstract * | 4-7, 17-19, 24-27, 46-49, 59-61, 66-69 | |
| A | * page 9, line 27 - page 28, line 9; claims 1-27; figures 1-5 * | 8,12-15, 28, 31-39, 50, 54-57, 70,73-81 | |

TECHNICAL FIELDS
SEARCHED (IPC)

H04N

-----

-/--

The present search report has been drawn up for all claims

| Place of search | Date of completion of the search | Examiner |
|---|---|---|
| Berlin | 3 November 2008 | Heising, Guido |

EPO FORM 1503 03.82 (P04C01)

**EUROPEAN SEARCH REPORT**

Application Number

EP 08 00 0979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILSON KWOK ET AL: "MULTI-DIRECTIONAL INTERPOLATION FOR SPATIAL ERROR CONCEALMENT" IEEE TRANSACTIONS ON CONSUMER ELECTRONICS, IEEE SERVICE CENTER, NEW YORK, NY, US, vol. 39, no. 3, 1 August 1993 (1993-08-01), pages 455-460, XP000396318 ISSN: 0098-3063 | 1-11,16, 17, 19-30, 37, 39-53, 58,59, 61-72, 79,81-83 | |
| Y | * abstract * | 18,38, 60,80 | |
| A | section 3 with figures 1-4 | 12-15, 31-36, 52, 54-57, 73-78 | |
| | ----- | | |
| X | DONG LIU ET AL: "Image Compression With Edge-Based Inpainting" IEEE TRANSACTIONS ON CIRCUITS AND SYSTEMS FOR VIDEO TECHNOLOGY, IEEE SERVICE CENTER, PISCATAWAY, NJ, US, vol. 17, no. 10, 1 October 2007 (2007-10-01), pages 1273-1287, XP011193147 ISSN: 1051-8215 | 1-12,16, 17, 20-31, 34,37, 40-54, 58, 62-73, 76,82,83 | |
| A | * abstract * | 13-15, 18,19, 32,33, 35,36, 38,39, 55-57, 59-61, 74,75, 77-81 | TECHNICAL FIELDS SEARCHED (IPC) |
| | sections III. - IV.A.; V.A. * page 1283, left-hand column, last paragraph; figures 1,2,5,6 * | | |
| | ----- | | |
| | -/-- | | |

The present search report has been drawn up for all claims

| Place of search | Date of completion of the search | Examiner |
|---|---|---|
| Berlin | 3 November 2008 | Heising, Guido |

Europäisches
Patentamt

European
Patent Office

Office européen
des brevets

# EUROPEAN SEARCH REPORT

Application Number

EP 08 00 0979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 761 063 A (SAMSUNG ELECTRONICS CO LTD [KR]) 7 March 2007 (2007-03-07) | 1-4, 9-12,16, 20-24, 29-31, 34,35, 40-46, 51-54, 58, 62-66, 71-73, 77,82,83 | |
| Y | * abstract * | 5-7, 17-19, 25-27, 37-39, 47-49, 59-61, 67-69, 79-81 | |
| A | * paragraph [0031] - paragraph [0060]; figures 1,2,4,5c,7-10,12 * | 8,13-15, 28,32, 33,36, 50, 55-57, 70, 74-76,78 | TECHNICAL FIELDS SEARCHED (IPC) |
| | * paragraph [0075] * | | |

-----

-/--

The present search report has been drawn up for all claims

| Place of search | Date of completion of the search | Examiner |
|---|---|---|
| Berlin | 3 November 2008 | Heising, Guido |

EPO FORM 1503 03.82 (P04C01)

Europäisches
Patentamt
European
Patent Office
Office européen
des brevets

# EUROPEAN SEARCH REPORT

Application Number

EP 08 00 0979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TAKESHI TSUKUBA, TOMOYUKI YAMAMOTO, YASUAKI TOKUMO, AND TOMOKO AONO: "Adaptive Multidirectional Intra Prediction" ITU-T SG16 Q6 VIDEO CODING EXPERTS GROUP, 33. VCEG MEETING, DOCUMENT VCEG-AG05, 20 October 2007 (2007-10-20), pages 1-6, XP002501810 Shenzhen, China | 4,5,24, 25,46, 47,66,67 | |
| A | in particular: paragraph 1, section 2.4 with figure 5 and page 4 last paragraph * the whole document * | 1-3, 6-23, 26-45, 48-65, 68-83 | |
| Y | EP 0 895 424 A (VICTOR COMPANY OF JAPAN [JP]) 3 February 1999 (1999-02-03) | 4,5,24, 25,46, 47,66,67 | |
| A | * abstract; figures 3-5 * | 1-3, 6-23, 26-45, 48-65, 68-83 | TECHNICAL FIELDS SEARCHED (IPC) |
| | * paragraph [0038] * | | |
| Y | WO 03/049452 A (BOSCH GMBH ROBERT [DE]; DAHLHOFF ACHIM [DE]; WIEN MATHIAS [DE]) 12 June 2003 (2003-06-12) | 4,5,24, 25,46, 47,66,67 | |
| A | * abstract * | 1-3, 6-23, 26-45, 48-65, 68-83 | |
| | * page 4, line 1 - page 8, line 5; figures 1-3 * | | |
| | -/-- | | |

The present search report has been drawn up for all claims

| Place of search | Date of completion of the search | Examiner |
|---|---|---|
| Berlin | 3 November 2008 | Heising, Guido |

EPO FORM 1503 03.82 (P04C01)

Europäisches
Patentamt

European
Patent Office

Office européen
des brevets

# EUROPEAN SEARCH REPORT

**Application Number**

EP 08 00 0979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TAICHIRO SHIODERA ET AL: "Block Based Extra/Inter-Polating Prediction for Intra Coding" IMAGE PROCESSING, 2007. ICIP 2007. IEEE INTERNATIONAL CONFERENCE ON, IEEE, PI, 1 September 2007 (2007-09-01), pages VI-445, XP031158358 ISBN: 978-1-4244-1436-9 | 6,7,26, 27,48, 49,68,69 | |
| A | * abstract * | 1-5, 8-25, 28-47, 50-67, 70-83 | |
| | section 3 with figures 1-4 ----- | | |
| Y | ROTHWELL C A ET AL: "Driving vision by topology" COMPUTER VISION, 1995. PROCEEDINGS., INTERNATIONAL SYMPOSIUM ON CORAL GABLES, FL, USA 21-23 NOV. 1995, LOS ALAMITOS, CA, USA,IEEE COMPUT. SOC, US, 21 November 1995 (1995-11-21), pages 395-400, XP010151111 ISBN: 978-0-8186-7190-6 | 17-19, 37-39, 59-61, 79-81 | |
| | | | TECHNICAL FIELDS SEARCHED (IPC) |
| A | * abstract * | 1-16, 20-36, 40-58, 62-78, 82,83 | |
| | sections 2 - 3.0.3 and section 5, paragraph 1 with figure 2 ----- -/-- | | |

The present search report has been drawn up for all claims

| Place of search | Date of completion of the search | Examiner |
|---|---|---|
| Berlin | 3 November 2008 | Heising, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 08 00 0979

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DRUGEON, V.; WEDI, T. AND PALFNER, T.: "High Precision Edge Prediction for Intra Coding" IEEE INTERNATIONAL CONF. ON IMAGE PROCESSING (ICIP 2009), 12 October 2008 (2008-10-12), - 15 October 2008 (2008-10-15) pages 1620-1623, XP002501811 San Diego, CA, USA * the whole document * | 1-83 | |
| A | PAN F ET AL: "Fast Mode Decision for Intra Prediction" JOINT VIDEO TEAM (JVT) OF ISO/IEC MPEG & ITU-T VCEG(ISO/IEC JTC1/SC29/WG11 AND ITU-T SG16 Q6), XX, XX, 7 March 2003 (2003-03-07), pages 1-22, XP002325066 sections 2 and 3 with equation 3, figures 1-3 | 1-83 | |

TECHNICAL FIELDS
SEARCHED        (IPC)

The present search report has been drawn up for all claims

| Place of search | Date of completion of the search | Examiner |
|---|---|---|
| Berlin | 3 November 2008 | Heising, Guido |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................................
& : member of the same patent family, corresponding
    document

EPO FORM 1503 03.82 (P04C01)

Europäisches
Patentamt

European
Patent Office

Office européen
des brevets

**Application Number**

EP 08 00 0979

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 08 00 0979

The Search Division considers that the present European patentapplication does not comply with the requirements of unity of invention and relates to severalinventions or groups of inventions, namely:

```
1. claims: 1-5,9-11,16,20-25,29,30,40-47,51-53,58,62-67,71,72,82,83

        High precision interpolation based intraprediction
                            ---

2. claims: 6-8,26-28,48-50,68-70

                Multiple edges based intraprediction
                            ---

3. claims: 12-15,31-36,54-57,73-78

        Combined candidate set of edge and directional
        intraprediction modes
                            ---

4. claims: 17-19,37-39,59-61,79-81

        Pixel map based edge detection for intraprediction
                            ---
```

## ANNEX TO THE EUROPEAN SEARCH REPORT
## ON EUROPEAN PATENT APPLICATION NO.

EP 08 00 0979

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2008

| Patent document cited in search report | | Publication date | Patent family member(s) | | Publication date |
|---|---|---|---|---|---|
| WO 0154416 | A | 26-07-2001 | AU | 3027601 A | 31-07-2001 |
| | | | BR | 0107706 A | 19-11-2002 |
| | | | CA | 2397090 A1 | 26-07-2001 |
| | | | CN | 1418436 A | 14-05-2003 |
| | | | CN | 1658677 A | 24-08-2005 |
| | | | EP | 1249132 A1 | 16-10-2002 |
| | | | FI | 20000131 A | 22-07-2001 |
| | | | HK | 1054288 A1 | 03-02-2006 |
| | | | JP | 2003520531 T | 02-07-2003 |
| | | | JP | 2008054335 A | 06-03-2008 |
| | | | US | 2005254717 A1 | 17-11-2005 |
| | | | US | 2001017942 A1 | 30-08-2001 |
| | | | US | 2008247657 A1 | 09-10-2008 |
| | | | ZA | 200205506 A | 16-01-2003 |
| EP 1761063 | A | 07-03-2007 | CN | 1929611 A | 14-03-2007 |
| | | | JP | 2007074726 A | 22-03-2007 |
| | | | KR | 20070027236 A | 09-03-2007 |
| | | | US | 2007053433 A1 | 08-03-2007 |
| EP 0895424 | A | 03-02-1999 | CN | 1207634 A | 10-02-1999 |
| | | | CN | 1501717 A | 02-06-2004 |
| | | | DE | 69838630 T2 | 28-08-2008 |
| | | | US | 6157676 A | 05-12-2000 |
| WO 03049452 | A | 12-06-2003 | AT | 324012 T | 15-05-2006 |
| | | | CN | 1596546 A | 16-03-2005 |
| | | | DE | 10158658 A1 | 12-06-2003 |
| | | | DK | 1457055 T3 | 07-08-2006 |
| | | | EP | 1457055 A2 | 15-09-2004 |
| | | | ES | 2262847 T3 | 01-12-2006 |
| | | | JP | 2005512419 T | 28-04-2005 |
| | | | US | 2004136458 A1 | 15-07-2004 |

EPO FORM P0459

For more details about this annex : see Official Journal of the European Patent Office, No. 12/82